# EUROPÄISCHE PATENTSCHRIFT

(11) **EP 3 894 093 B1**
(45) Veröffentlichungstag und Bekanntmachung des Hinweises auf die Patenterteilung: **22.04.2026**
(21) Anmeldenummer: 19813309.2
(22) Anmeldetag: 29.11.2019
(51) Int. Cl.: B05C 5/02, B05C 11/10, F16K 31/12, B05B 1/30

(54) **DOSIERSYSTEM UND VERFAHREN ZUR STEUERUNG EINES DOSIERSYSTEMS**
METERING SYSTEM AND METHOD FOR CONTROLLING A METERING SYSTEM
SYSTÈME DE DOSAGE ET PROCÉDÉ POUR COMMANDER UN SYSTÈME DE DOSAGE

(30) Priorität: 10.12.2018 DE 102018131567
(43) Veröffentlichungstag der Anmeldung: 20.10.2021
(60) Teilanmeldung: 24210318.2
(73) Patentinhaber: Vermes Microdispensing GmbH, 83607 Holzkirchen (DE)
(72) Erfinder: FLIESS, Mario, 81549 München (DE); STEINHAUSER, Andreas, 81547 München (DE); TETZNER, Tobias, 81673 München (DE)
(74) Vertreter: Beckord & Niedlich Patentanwälte PartG mbB
(86) Internationale Anmeldenummer: PCT/EP2019/083127
(87) Internationale Veröffentlichungsnummer: WO 2020/120176

(56) Entgegenhaltungen:
- EP-A1- 0 111 850
- EP-A2- 2 586 535
- DE-A1- 4 122 594
- DE-B- 1 255 009
- US-A- 5 467 899
- US-A1- 2016 221 022

## Beschreibung

Die Erfindung betrifft ein Dosiersystem zum Dosieren eines flüssigen bis zähflüssigen Dosierstoffs, vorzugsweise zum Aufbringen des Dosierstoffs auf ein Substrat, sowie ein Verfahren zur Steuerung eines solchen Dosiersystems.

Dosiersysteme der eingangs genannten Art werden in verschiedensten Anwendungen dazu eingesetzt, ein zu dosierendes Medium, typischerweise ein flüssiger bis zähflüssiger Dosierstoff, gezielt zu dosieren. Im Rahmen der sogenannten "Mikrodosiertechnik" ist es dabei oftmals erforderlich, dass sehr geringe Mengen des Mediums hochgenau, das heißt zum richtigen Zeitpunkt, am richtigen Ort und in einer genau dosierten Menge auf eine Zieloberfläche befördert werden.

Dosierungssysteme nach dem Stand der Technik sind beispielsweise aus DE1255009B, US2016221022A1,DE4122594A1 oder EP0111850A1 bekannt.

Oftmals erfolgt die Dosierung berührungslos, d. h. ohne einen direkten Kontakt zwischen dem Dosiersystem und der Zieloberfläche. Dies kann beispielsweise durch eine tröpfchenweise Abgabe des Dosierstoffs über eine Düse des Dosiersystems erfolgen. Dabei kommt das Medium nur mit einem Innenraum der Düse und einem, zumeist vorderen, Bereich eines Ausstoßelements des Dosiersystems in Kontakt. Die Größe der Tröpfchen bzw. die Menge des Mediums pro Tröpfchen sind durch den Aufbau und die Ansteuerung sowie durch die dadurch erzielte Wirkung der Düse möglichst genau vorherbestimmbar. Ein solches kontaktloses Verfahren wird häufig auch als "Jet-Verfahren" bezeichnet. Ein typisches Beispiel dafür ist die Dosierung von Klebstoffpunkten, Lötpasten etc. bei der Bestückung von Leiterplatinen oder anderen elektronischen Elementen, oder die Aufbringung von Konverter-Materialien für LEDs.

Zur Abgabe des Mediums aus dem Dosiersystem kann in der Düse des Dosiersystems ein bewegliches Ausstoßelement angeordnet sein. Das Ausstoßelement kann im Inneren der Düse mit relativ hoher Geschwindigkeit in Richtung einer Düsenöffnung bzw. Austrittsöffnung nach vorne gestoßen werden, wodurch ein Tropfen des Mediums ausgestoßen wird und anschließend wieder zurückgezogen werden. Das bedeutet, dass bei den eingangs genannten Dosiersystemen, wie auch bei dem erfindungsgemäßen Dosiersystem, der Dosierstoff durch das Ausstoßelement selbst aus der Düse ausgestoßen wird. Zum Ausstoßen aus der Düse kommt das Ausstoßelement in Kontakt mit dem abzugebenden Dosierstoff und "drückt" bzw. "schiebt" den Dosierstoff auf Grund einer Bewegung des Ausstoßelements und/oder der Düse aus der Düse des Dosiersystems hinaus. Mittels des beweglichen Ausstoßelements wird also der Dosierstoff quasi "aktiv" aus der Düse ausgestoßen. Damit unterscheiden sich derartige Dosiersysteme, wie auch das erfindungsgemäße Dosiersystem, von anderen Dispenser-Systemen, bei denen eine Bewegung eines Verschlusselements lediglich zu einer Öffnung der Düse führt, wobei der unter Druck stehende Dosierstoff dann von selbst aus der Düse austritt. Dies ist z. B. bei Einspritzventilen von Verbrennungsmotoren der Fall.

Üblicherweise kann das Ausstoßelement zudem in eine Verschlussstellung gebracht werden, indem es in der Düse an einem Dichtsitz der Düsenöffnung fest anschließt und dort vorübergehend verbleibt. Bei zähflüssigeren Dosierstoffen kann es auch ausreichen, dass das Ausstoßelement einfach in der Rückzugsstellung, d. h. vom Dichtsitz entfernt verbleibt, ohne dass ein Tropfen des Mediums austritt.

Die zum Ausstoßen des Dosierstoffs nötige Bewegung des Ausstoßelements erfolgt typischerweise mit Hilfe einer Aktoreinheit des Dosiersystems. Eine solche Aktoreinheit kann prinzipiell auf verschiedene Arten realisiert sein, z. B. mittels eines pneumatisch oder hydraulisch betriebenen Aktors. Alternativ kommen auch piezoelektrische und/oder elektromagnetisch betriebene Aktoren zum Einsatz. Gegenüber den zuvor genannten Aktorprinzipien zeichnet sich eine Aktoreinheit mit einem Pneumatik- bzw. Hydraulik-Aktor durch einen vergleichsweise einfachen Aufbau aus, was insgesamt auch die Komplexität des Dosiersystems verringert. Daher stellen pneumatische bzw. hydraulische Aktoren eine kosteneffiziente Lösung für den Betrieb von Dosiersystemen dar, insbesondere bei der Verarbeitung von einfach zu dosierenden Dosierstoffen.

Pneumatik- bzw. Hydraulik-Aktoren können auf verschiedene Arten realisiert sein. Beispielsweise sind Dosiersysteme bekannt, bei denen der Aktor mittels eines Pneumatik- bzw. Hydraulikzylinders realisiert ist. Da bei derartigen Systemen ein vergleichsweise hoher Verschleiß im Bereich von reibenden Dichtungen des Zylinders auftritt, kommen vermehrt Pneumatik- bzw. Hydraulik-Aktoren zum Einsatz, die mittels eines mit Druckmedium beaufschlagbaren Balgs realisiert sind.

Eine weitere bevorzugte Alternative ist es, den Pneumatik- bzw. Hydraulik-Aktor mittels einer mit Druckmedium beaufschlagbaren Membran auszubilden. Diese Variante bringt den Vorteil mit sich, dass einerseits auf reibende Dichtungen, wie z. B. bei einem Pneumatik- bzw. Hydraulikzylinder, verzichtet werden kann. Andererseits kann der konstruktive und der fertigungstechnische Aufwand gegenüber "balgbetriebenen" Aktoren reduziert werden.

Weiterhin vorteilhaft können "membranbetriebene" Pneumatik- bzw. Hydraulik-Aktoren mit einer höheren Taktfrequenz betrieben werden, als das bei "balgbetriebenen" bzw. "zylinderbetriebenen" Aktoren üblicherweise der Fall ist. Daher eignen sich "membranbetriebene" Pneumatik- oder Hydraulik-Aktoren insbesondere für hochfeine Dosieranforderungen.

Um die von einem "membranbetriebenen" Pneumatik- bzw. Hydraulik-Aktor erzeugte Kraft auf das Ausstoßelement des Dosiersystems zu übertragen, ist bei bekannten Dosiersystemen eine auslenkbare Membran des Aktors fest mit dem Ausstoßelement des Dosiersystems verbunden. Beispielsweise kann das Ausstoßelement dauerhaft mit der Membran verschweißt, vernietet, verschraubt, verlötet oder verklebt sein. Ebenso ist es möglich, dass das Ausstoßelement die Membran vollständig durchdringt und an zumindest einer Seitenfläche der Membran fest mit der Membran verschraubt ist oder mittels eines Sicherungsrings bzw. einer Verstiftung mit der Membran fest verbunden ist. Mit den zuvor genannten Methoden lässt sich zwar eine feste Kopplung zwischen dem Ausstoßelement und der Membran erreichen.

Allerdings führt diese Konstruktionsweise einerseits auch dazu, dass eine zu bewegende Masse der Membran aufgrund eines benötigten Verbindungsmechanismus insgesamt zunimmt. Um die Membran dennoch in gewünschter Weise auszulenken bzw. zu bewegen, kann ein Durchmesser der Membran vergrößert werden, um eine Beschleunigungskraft der Membran zu erhöhen. Allerdings führt eine Vergrößerung des Membran-Durchmessers auch dazu, dass ein Volumen eines Aktorraums des Pneumatik- bzw. Hydraulik-Aktors, welcher zur Auslenkung der Membran mit Druckmedium befüllt wird, vergrößert werden muss. Das führt konstruktionsbedingt jedoch auch dazu, dass der Befüll- bzw. Entleerungsvorgang des Aktorraums zeitaufwendiger wird, wobei die Taktfrequenz des Dosiersystems unnötigerweise verlangsamt wird.

Andererseits kann bei einem herkömmlichen Pneumatik- bzw. Hydraulik-Aktor die Membran auf Grund der festen Anbindung des Ausstoßelements an die Membran deutlich geschwächt werden. Besonders die Verbindungsstelle zwischen Ausstoßelement und Membran kann daher eine Schwachstelle der Membran nach der Art einer Sollbruchstelle ausbilden, was insbesondere im Dauerbetrieb des Dosiersystems problematisch sein kann. Dadurch kann eine Lebensdauer bzw. Einsatzdauer des Pneumatik-Aktors erheblich verkürzt werden, was einen höheren Wartungsaufwand und damit höhere Betriebskosten des Dosiersystems verursachen kann.

Es ist daher eine Aufgabe der vorliegenden Erfindung, ein Dosiersystem mit einem Aktor bereitzustellen, mit dem die zuvor genannten Nachteile reduziert und bevorzugt vermieden werden. Weiterhin ist es eine Aufgabe, ein Verfahren zu Steuerung eines solchen Dosiersystems bereit zu stellen.

Diese Aufgabe wird durch ein Dosiersystem gemäß Patentanspruch 1 und durch ein Verfahren zur Steuerung eines solchen Dosiersystems gemäß Patentanspruch 13 gelöst.

Ein erfindungsgemäßes Dosiersystem zum Dosieren eines flüssigen bis zähflüssigen Dosierstoffs, insbesondere zum vorzugsweise kontaktlosen Aufbringen eines Dosierstoffs auf ein Substrat, weist ein, gegebenenfalls mehrteiliges, Gehäuse auf, wobei das Gehäuse zumindest eine Düse und einen Zuführkanal für Dosierstoff umfasst. Der zu dosierende Dosierstoff gelangt mittels des Zuführkanals des Dosiersystems in eine Düsenkammer dieser Düse.

Das Dosiersystem weist weiterhin ein Ausstoßelement auf, welches im Gehäuse beweglich angeordnet ist, sowie eine mit dem Ausstoßelement zur Dosierstoffabgabe gekoppelte bzw. zusammenwirkende Aktoreinheit. Die Aktoreinheit wirkt in Folge der Kopplung derart mit dem Ausstoßelement zusammen, dass mittels des Ausstoßelements eine Dosierstoffabgabe aus der Düse des Dosiersystems erfolgt. Ein solches Ausstoßelement stößt also, wie oben im einleitenden Teil der Anmeldung erklärt, den Dosierstoff "aktiv" aus. Bevorzugt kann das Dosiersystem nach der Art eines Jet-Ventils realisiert sein, wobei die Dosierstoffabgabe wie eingangs erläutert berührungslos erfolgen kann.

Erfindungsgemäß umfasst die Aktoreinheit zumindest einen Aktor mit einer, wie später noch erläutert bevorzugt scheibenartig ausgebildeten, Membran, welche auch als "Betätigungsmembran" bezeichnet werden kann. Besonders bevorzugt umfasst der Aktor nur eine einzige Membran.

Die Aktoreinheit kann darüber hinaus weitere Komponenten umfassen, die zur Bewegung des Ausstoßelements im Dosiersystem erforderlich sind, wie später erläutert wird. Demgegenüber können bevorzugt solche Komponenten des Dosiersystems, die mit dem Dosierstoff in Berührung kommen, z. B. das Ausstoßelement, in einer Fluidikeinheit des Dosiersystems zusammengefasst sein, wie ebenfalls später erläutert wird.

Die Membran des Aktors, insbesondere eine vom Ausstoßelement abgewandte Seitenfläche der Membran, ist mittels zumindest eines Druckmediums so beaufschlagbar, dass das Ausstoßelement in einer Ausstoßrichtung des Ausstoßelements zum Ausstoßen des Dosierstoffs aus der Düse bewegt bzw. ausgelenkt wird. Es werden gasförmige und/oder flüssige Stoffe als Druckmedium verwendet. Bei dem Beaufschlagen der Membran trifft bzw. schlägt - wie der Name "Beaufschlagen" sagt - das, insbesondere in Bewegung befindliche, Druckmedium direkt auf die vom Ausstoßelement wegweisende Seitenfläche (Oberseite) der Membran auf. Das bedeutet, die Membran wird direkt durch das Druckmedium selbst ausgelenkt, um Dosierstoff aus der Düse auszustoßen. Dazu wird das Ausstoßelement mittels der Membran in Richtung einer Austrittsöffnung der Düse bewegt. Die Bewegung kann so erfolgen, dass eine Spitze des Ausstoßelements bei einer Beendigung der Ausstoßbewegung einem Dichtsitz der Düse direkt anliegt. Alternativ kann die Ausstoßbewegung auch bereits vorher gestoppt werden, so dass ein Abstand zwischen der Spitze des Ausstoßelements und dem Dichtsitz der Düse verbleibt.

Erfindungsgemäß ist das Ausstoßelement separat gegenüber der Membran ausgebildet, d. h. es handelt sich um ein von der Membran an sich getrenntes Bauteil. Besonders bevorzugt ist das Ausstoßelement einteilig ausgebildet. Zur Kopplung an die Aktoreinheit wird das Ausstoßelement im Betrieb des Dosiersystems mittels einer direkt auf das Ausstoßelement wirkenden Kraft durch einen Anpressdruck gegen eine in Richtung des Ausstoßelements weisende Seitenfläche der Membran in eine Wirkposition gedrückt. Die zur Kopplung vorgesehene Seitenfläche der Membran weist also von der mit Druckmedium beaufschlagbaren Seitenfläche der Membran weg. Die beiden Seitenflächen der Membran entsprechen hinsichtlich ihrer Ausgestaltung einer Grundfläche der Membran, wie später erläutert wird.

Die in Richtung des Ausstoßelements bzw. der Düse weisende Seitenfläche ist bei bestimmungsgemäßer Verwendung des Dosiersystems üblicherweise nach "unten" gerichtet (da nämlich das Dosiersystem im Einsatz meist so angeordnet ist, dass das Dosiermittel nach unten aus der Düse abgegeben wird), und wird daher im Folgenden, ohne eine Beschränkung darauf, auch als "Unterseite" der Membran bezeichnet. Die der Unterseite gegenüberliegende Seitenfläche der Membran, die mit Druckmedium beaufschlagbar ist, wird entsprechend als "Oberseite" der Membran bezeichnet.

Zur Kopplung wird zwischen dem Ausstoßelement, z. B. einem Stößel, und der Aktoreinheit die Kraft also nur auf das Ausstoßelement selber ausgeübt, also nicht auf die Membran direkt sondern nur indirekt über das Ausstoßelement, d. h. es kann zumindest ein Teil der Kraft auf Grund der Kopplung von dem Ausstoßelement an die Membran übertragen werden.

Erfindungsgemäß ist wie erwähnt das Ausstoßelement separat bzw. gesondert ausgebildet, d. h. das Ausstoßelement ist nicht fest bzw. dauerhaft mit der Membran verbunden. Insbesondere ist zur Kopplung des Ausstoßelements an die Aktoreinheit bzw. die Membran des Aktors kein Formschluss und auch kein Stoffschluss zwischen den jeweiligen Komponenten nötig. Die Kopplung erfolgt eher nach dem Prinzip des Kraftschlusses. Mittels der auf das Ausstoßelement wirkenden Kraft kann das Ausstoßelement im Betrieb des Dosiersystems kontinuierlich in Wirkkontakt mit der in Richtung des Ausstoßelements weisenden Seitenfläche der Membran gehalten werden. Nur wenn die auf das Ausstoßelement zur Kopplung einwirkende Kraft fehlen bzw. einen bestimmen Wert unterschreiten sollte, bilden das Ausstoßelement und die Membran wieder zwei ungekoppelte selbstständige Komponenten.

Das Halten des Ausstoßelements an der Membran erfolgt also insbesondere "durchdringungsfrei" und "beschädigungsfrei". Das bedeutet, dass das Ausstoßelement beispielsweise nicht mit der Membran verschraubt, verschweißt, verklebt etc. ist. Insbesondere erfolgt zur Kopplung im Wesentlichen keine Veränderung einer Oberflächenbeschaffenheit einer Unterseite und/oder Oberseite der Membran.

Da das Ausstoßelement und die Membran als eigenständige, unverbundene Komponenten ausgebildet sind, welche lediglich mittels der auf das Ausstoßelement einwirkenden Kraft zu einer funktionalen Einheit (das Dosiersystem) kombiniert werden, kann mittels des erfindungsgemäßen Dosiersystems vorteilhafterweise erreicht werden, dass im Betrieb des Dosiersystems vom Aktor der Aktoreinheit nur sehr geringe Massen zu bewegen sind. Damit kann einerseits ein Gesamtgewicht der Betätigungsmembran möglichst gering gehalten werden, wobei auch ein Volumen des Aktorraums zur Betätigung der Membran klein gehalten werden kann. Durch diese Konstruktionsweise kann ein Befüll- und Entleerungsvorgang des Aktorraums beschleunigt werden, so dass der Aktor sehr hohe dynamische Werte erreicht. Vorteilhafterweise ist das Dosiersystem damit trotz einer vergleichsweise einfachen Konstruktion auch zur Dosierung von hochviskosen Dosierstoffen geeignet.

Weiterhin vorteilhaft kann bei dem erfindungsgemäßen Dosiersystem eine konstruktionsbedingte Materialschwächung der Membran, wie dies bei herkömmlichen Dosiersystemen im Bereich der festen Verbindung zwischen Membran und Ausstoßelement häufig der Fall ist, nahezu vollständig vermieden werden. Weiterhin kann bei dem Aktor auch auf reibende Dichtungen, wie diese z. B. bei Pneumatik- bzw. Hydraulikzylindern erforderlich sind, verzichtet werden. Vorteilhafterweise kann daher mittels des erfindungsgemäßen Dosiersystems eine unterbrechungsfreie Einsatzdauer des Aktors und damit auch des gesamten Dosiersystems verlängert werden, wobei gleichzeitig sehr hohe Taktfrequenzen bei der Dosierstoffabgabe möglich sind.

Bei einem erfindungsgemäßen Verfahren zur Steuerung eines Dosiersystem zum Dosieren eines flüssigen bis zähflüssigen Dosierstoffs, insbesondere zum vorzugsweise kontaktlosen Aufbringen des Dosierstoffs auf ein Substrat, weist das Dosiersystem ein, gegebenenfalls mehrteiliges, Gehäuse auf, wobei das Gehäuse zumindest eine Düse und einen Zuführkanal für Dosierstoff umfasst. Das Gehäuse weist wie oben erwähnt ein Ausstoßelement auf, welches im Gehäuse beweglich angeordnet ist, sowie eine mit dem Ausstoßelement zur Dosierstoffabgabe gekoppelte bzw. zusammenwirkende Aktoreinheit.

Erfindungsgemäß wird eine (Betätigungs-)Membran eines Aktors der Aktoreinheit mit einem Druckmedium beaufschlagt, um das Ausstoßelement in einer Ausstoßrichtung des Ausstoßelements zum Ausstoßen des Dosierstoffs aus der Düse zu bewegen bzw. auszulenken. Es werden gasförmige und/oder flüssige Stoffe als Druckmedium verwendet. Bevorzugt wird eine vom Ausstoßelement weg weisende Seitenfläche (auch "Oberseite" genannt) der Membran mit dem Druckmedium beaufschlagt, um das Ausstoßelement in Richtung einer Düse zu bewegen. Zur Kopplung an die Aktoreinheit wird eine Kraft auf das Ausstoßelement selber ausgeübt. Mittels der auf das Ausstoßelement wirkenden Kraft wird das Ausstoßelement durch einen Anpressdruck gegen eine in Richtung des Ausstoßelements weisende Seitenfläche (auch "Unterseite" genannt) der Membran gedrückt bzw. gepresst. Die Kraft kann so auf das Ausstoßelement ausgeübt werden, dass das Ausstoßelement im Betrieb des Dosiersystems kontinuierlich in Wirkkontakt mit der Membran gehalten wird, insbesondere mit der in Richtung des Ausstoßelements weisenden Seitenfläche der Membran.

Weitere, besonders vorteilhafte Ausgestaltungen und Weiterbildungen der Erfindung ergeben sich aus den abhängigen Ansprüchen sowie der nachfolgenden Beschreibung, wobei die unabhängigen Ansprüche einer Anspruchskategorie auch analog zu den abhängigen Ansprüchen und Ausführungsbeispielen einer anderen Anspruchskategorie weitergebildet sein können und insbesondere auch einzelne Merkmale verschiedener Ausführungsbeispiele bzw. Varianten zu neuen Ausführungsbeispielen bzw. Varianten kombiniert werden können.

Vorzugsweise ist das Dosiersystem so ausgebildet, dass die zur Kopplung auf das Ausstoßelement, z. B. einen Stößel, einwirkende Kraft einer Ausstoßrichtung, also einer Richtung einer Ausstoßbewegung, des Ausstoßelements entgegengerichtet ist. Die Ausstoßrichtung entspricht der (linearen) Bewegung des Ausstoßelements zur Dosierstoffabgabe aus der Düse. Die Ausstoßrichtung ist also ausgehend von der Koppelstelle (zwischen Ausstoßelement und Membran) auf die Düse des Dosiersystems hin gerichtet. Bevorzugt kann somit zur Kopplung eine Kraft auf das Ausstoßelement so ausgeübt werden, dass eine (Wirk-)Richtung der Kraft von der Düse weg weist und im Wesentlichen rechtwinklig zu einer Grundfläche der Membran des Aktors ausgerichtet ist.

Eine gegenteilige Bewegung des Ausstoßelements, welches synonym auch als "Stößel" bezeichnet wird, also eine Bewegung von der Düse weg, wird als Rückzugsbewegung bezeichnet. Entsprechend erfolgt die Rückzugsbewegung in einer Rückzugsrichtung des Ausstoßelements, wie nachfolgend erläutert wird.

Besonders bevorzugt kann das Dosiersystem so ausgebildet sein, dass das Ausstoßelement zur Kopplung an die Aktoreinheit mittels einer Kraft, welche durch zumindest eine Feder- und/oder Druckanordnung aufgebracht wird, im Betrieb permanent an die zum Ausstoßelement weisende Unterseite der Membran gedrückt wird. Die von der Feder- und/oder Druckanordnung ausgeübte Kraft ist insbesondere groß genug, um das Ausstoßelement auch während einer Rückzugsbewegung des Ausstoßelements, also wenn das Ausstoßelement nach erfolgter Dosierstoffabgabe wieder von der Düse weg in Richtung der Aktoreinheit bewegt wird, in direktem Kontakt kontinuierlich an der Unterseite der Membran zu halten.

Die Feder- und/oder Druckanordnung kann einfach als Federanordnung aus mehreren Federn bzw. anderen federnd wirkenden Bauteilen bestehen. Im einfachsten und daher oft bevorzugten Fall, kann sie aus einem einzelnen federnd wirkenden Bauteil, z. B. einer einzelnen Feder, insbesondere Schraubenfeder, bestehen. Im Folgenden wird die Federanordnung der Einfachheit halber (ohne Beschränkung der Allgemeinheit) auch als Feder oder "Rückstellfeder" bezeichnet. Alternativ oder zusätzlich kann die Feder- und/oder Druckanordnung auch Andruckelemente in anderer Form aufweisen wie pneumatische Druckzylinder, eine andere Membraneinrichtung oder dergleichen.

Bevorzugt kann die Rückstellfeder dazu ausgebildet sein, das Ausstoßelement, insbesondere sobald die Membran nicht mehr mit Druckmedium beaufschlagt wird, innerhalb eines bestimmten Zeitintervalls in eine Ruheposition zu bewegen. Die Ruheposition des Ausstoßelements ist dadurch gekennzeichnet, dass ein (im Betrieb) größtmöglicher Abstand zwischen einer Spitze des Ausstoßelements und der Düse erreicht ist, d. h. das Ausstoßelement ist durch die Feder so weit als möglich nach oben in Richtung der Aktoreinheit gedrückt. Vorzugsweise liegt das Ausstoßelement auch in einer Ruheposition der Unterseite der Membran direkt an.

Bevorzugt kann die Rückstellfeder zusätzlich auch einen "Rückstelleffekt" auf die Membran ausüben. Zwar kann die Membran vorzugsweise so ausgebildet sein, dass sie selbstständig innerhalb eines bestimmten Zeitintervalls in eine Ruheposition zurückkehrt, sobald die Membran nicht mehr mit Druckmedium beaufschlagt wird, d. h. die Membran kann elastisch ausgebildet sein. Allerdings können die von der Rückstellfeder ausgeübten Kräfte die elastischen Eigenschaften der Membran zumindest unterstützen, d. h. die Feder kann eine Rückkehr der Membran in die Ruheposition erleichtern.

Vorzugsweise kann die Rückstellfeder daher ausgebildet sein, um eine Kraft an die Membran zu übertragen (indirekt mittels des Ausstoßelements), wobei die Kraft vorzugsweise von der Düse weg in Richtung der Aktoreinheit wirkt und bevorzugt so bestimmt sein kann, dass die Rückstellfeder die Membran (indirekt) um einen gewissen Betrag nach oben schiebt und/oder sogar in eine Ruheposition der Membran bringt. Die Ruheposition der Membran liegt dann vor, wenn die Membran aktuell nicht mit Druckmedium beaufschlagt wird und/oder nicht in Richtung der Düse ausgelenkt ist. Vorzugsweise kann sich die Membran bzw. Membranwand in der Ruheposition im Wesentlichen in einer Ebene erstrecken, d. h. sie weist einen im Querschnitt im Wesentlichen geraden bzw. linearen Verlauf auf. Es ist aber auch möglich, dass die Membran in der Ruheposition zumindest abschnittsweise nach "oben", d. h. in Richtung der Aktoreinheit, gewölbt ist, z. B. indem die Membran durch das Ausstoßelement nach oben gedrückt wird,

Bevorzugt kann die Kraft auf das Ausstoßelement zur Kopplung wie erwähnt so wirken, dass das Ausstoßelement auch in der Ruheposition der Unterseite der Membran zwar direkt anliegt, wobei allerdings ein zuvor erwähnter im Querschnitt im Wesentlichen linearer Verlauf der Membran gewahrt bleibt. Alternativ kann die Feder aber auch so bemessen und/oder ausgestaltet sein, dass das Ausstoßelement (in einer Ruheposition) die Membran (in einer Ruheposition) um einen bestimmten Betrag nach oben in Richtung Aktoreinheit drückt bzw. auslenkt. Bevorzugt kann die Membran in einer Ruheposition zumindest bereichsweise einem Grundkörper des Aktors direkt anliegen.

Die Membran des Aktors kann vorzugsweise scheibenartig ausgebildet sein. Dabei wird unter einer Scheibe allgemein ein geometrischer Körper bzw. eine Struktur verstanden, dessen Grundfläche um ein Vielfaches höher ist als seine Dicke. Die Grundfläche entspricht einer Fläche der Membran mit dem größten Flächenmaß. Die Grundfläche entspricht also einerseits der in Richtung des Stößels weisenden Seitenfläche der Membran und andererseits der (gegenüberliegenden) mit Druckmedium beaufschlagbaren Seitenfläche der Membran.

Eine Dicke der Membran entspricht einer Ausdehnung der Membran orthogonal zur Grundfläche, wobei sich die Dicke z. B. aus einem Schnitt quer zur Grundfläche ergibt (Querschnitt). Vorzugsweise kann die Membran über ihre gesamte Erstreckung hinweg eine konstante einheitliche Dicke haben. Es ist allerdings auch möglich, dass ein Randbereich der Membran (im Querschnitt) dünner ausgebildet ist, als ein mittlerer Bereich der Membran. Damit kann eine Steifigkeit der Membran im mittleren Bereich erhöht werden, z. B. dort wo das Ausstoßelement der Membran anliegt, wobei die Membran bei Beaufschlagung mit Druckmedium überwiegend im Randbereich ausgelenkt wird. Dadurch kann eine Wirkfläche der Membran und damit die von der Membran erzeugte Kraft erhöht werden. Alternativ oder zusätzlich könnte die Membran in einem Randbereich eine Sicke aufweisen, wie dies z. B. bei Lautsprechern der Fall ist.

Ebenso ist es denkbar, dass die Membran im Querschnitt gewellt ist, z. B. nach der Art eines Wellblechs, wobei eine Federrate und damit eine Rückstellkraft der Membran gegenüber einer "nicht-gewellten" bzw. eben ausgebildeten Membran verringert ist. Nachfolgend wird der Einfachheit halber, ohne eine Beschränkung darauf, von einer ebenen Membran mit einer einheitlichen Dicke ausgegangen, die in einer Ruheposition einen im Querschnitt überwiegend geraden Verlauf hat.

Ungeachtet der konkreten Ausgestaltung der Membran, kann eine Dicke der Membran zumindest 10 µm, vorzugsweise wenigstens 50 µm, bevorzugt wenigstens 150 µm betragen. Eine maximale Dicke der Membran kann höchstens 1000 µm, vorzugsweise höchstens 300 µm, bevorzugt höchstens 200 µm betragen.

Vorzugsweise kann die Grundfläche der Membran im Wesentlichen rund bzw. kreisförmig ausgebildet sein. Sie kann aber grundsätzlich auch ellipsenförmig, rechteckig oder beliebig andersartig ausgebildet sein. Bevorzugt ist dabei, dass die Membran als flache bzw. dünne, also "tellerartige", Struktur ausgebildet ist. Besonders bevorzugt ist die Membran hohlraumfrei ausgebildet, d. h. im Inneren der Membran befinden sich keine Hohlräume wie z. B. flüssigkeitsgefüllte und/oder gasgefüllte Kammern. Damit unterscheidet sich eine Membran auf Grund ihrer Konstruktion deutlich von einem Balg, z. B. einem metallenen Faltenbalg. Ein Balg umfasst anders als eine Membran einen mehr oder wenig elastischen sich "ziehharmonikaartig" zusammenfaltenden Schlauch sowie einen darin befindlichen und gegenüber einer Umgebung abgedichteten Innenraum, z. B. einen mit Gas befüllbaren Hohlraum.

Die Membran ist vorzugsweise vollständig aus Metall ausgebildet. Bevorzugt kann die Membran eine Mischung verschiedener Metalle bzw. eine Legierung umfassen. Beispielsweise kann die Membran aus einem Edelstahl (Federstahl) ausgebildet sein. Alternativ kann die Membran z. B. eine Kupferberyllium-Legierung umfassen. Weiterhin sind auch Elastomere oder Kunststoffe als Werkstoff der Membran denkbar. Je nach Anforderung ist es auch denkbar, dass eine mehrschichtige Membran verwendet wird, wobei die einzelnen Schichten aus demselben oder unterschiedlichen Werkstoffen gefertigt sein können. Beispielsweise kann eine Membran auf der Oberseite und/oder Unterseite eine spezielle Beschichtung aufweisen. Bevorzugt kann die Membran so beschaffen sein, dass sie eine hohe Schwingungsfestigkeit und eine bestimmte Elastizität hat, damit eine gewünschte Auslenkung der Membran möglich ist. Bevorzugt ist die Membran so beschaffen, dass sie ein "aktives" Ausdehnungselement gegenüber einem starren Grundkörper des Aktors darstellt, wie nachfolgend erläutert wird.

Vorzugsweise ist die Membran, insbesondere ein Randbereich der Membran, vollständig umlaufend mit einem starren, gegebenenfalls mehrteiligen, Grundkörper des Aktors abgedichtet gekoppelt. Damit wird zwischen dem Aktorgrundkörper und der Membran, insbesondere deren Oberseite, ein mit Druckmedium beaufschlagbarer Aktorraum des Aktors ausgebildet. Zur Ausbildung des Aktorraums kann die Membran z. B. mit dem Grundkörper verschweißt oder verlötet sein. Weiterhin kann die Membran auch mit dem Aktor-Grundkörper verklemmt sein, z. B. indem die Membran zwischen zwei Gehäuseteilen des Aktor-Grundkörpers abgedichtet eingeklemmt ist.

Der Aktorraum befindet sich also innerhalb des Aktors selber. Vorzugsweise kann der Aktorraum gasdicht und/oder flüssigkeitsdicht gegenüber einer Umgebung des Aktors ausgebildet sein. Vorzugsweise umfasst der Aktorgrundkörper an einer der Membran gegenüberliegenden Seite einen Durchbruch (im Folgenden ohne Beschränkung der Allgemeinheit als "Bohrung" bezeichnet), welche vom Aktorraum nach außerhalb des Aktorraums führt, um eine Ansteuerung des Aktors zu ermöglichen. Bevorzugt kann ein Steuerventil der Aktoreinheit unmittelbar an die Bohrung angrenzen, um einen Durchfluss des Druckmediums durch die Bohrung zu steuern, also um den Aktorraum zu "öffnen" und zu "schließen", wie nachfolgend erläutert wird.

Vorteilhafterweise ist der Aktor mittels nur einer Membran realisiert, so dass auch lediglich diese eine Membran abgedichtet mit dem Aktorgrundkörper gekoppelt werden muss. Das ermöglicht eine konstruktive Vereinfachung des Dosiersystems, insbesondere im Vergleich zu "balgbetriebenen" Systemen. Bei Letzteren muss der Balg bzw. der Schlauch üblicherweise an zwei gegenüberliegenden Enden abgedichtet werden.

Zur Ansteuerung des Aktors kann dem Aktorraum ein Druckmedium, z. B. über die zuvor erwähnte Bohrung, zugeführt werden. Vorzugsweise kann im Aktorraum ein Überdruck erzeugt werden, um die Membran ausgehend von einer Ruheposition nach "unten", d. h. in Richtung der Düse des Dosiersystems auszulenken. Der Höhe des Überdrucks kann vorgegeben werden und kann sich z. B. nach der Beschaffenheit (z. B. die Viskosität) des Dosierstoffs richten. Beispielweise könnte der Überdruck im Bereich von ca. 5 bar bis 8 bar liegen. Es sind jedoch auch deutlich höhere Drücke möglich, wie später erläutert wird. Die Membran kann auch als Druckmembran bezeichnet werden, wobei die Membran ausgebildet ist, eine Kraft auf den Stößel zu übertragen und gleichzeitig den Aktorraum abzudichten. Weiterhin kann der Aktorraum mittels derselben Bohrung auch wieder entleert werden, d. h. der Überdruck im Aktorraum wird abgebaut, wobei die Membran, auf Grund ihrer Elastizität und/oder mittels der Rückstellfeder, wieder in eine vorzugsweise vertikale Ruheposition gebracht wird.

Der Aktorraum kann grundsätzlich mit einem beliebigen strömenden Fluid befüllt werden, d. h. es können (komprimierte) gasförmige und/oder flüssige Stoffe als Druckmedium verwendet werden. Bevorzugt kann ein komprimiertes gasförmiges Fluid als Druckmedium verwendet werden, z. B. ein einzelnes Gas oder ein Gasgemisch, z. B. Luft. Nachfolgend wird davon ausgegangen, dass der Aktor mit komprimierter Raumluft betrieben wird, da diese bei den meisten Anlagen mit Dosiersystemen ohnehin zur Verfügung steht. Der Aktor wird daher im Rahmen der Anmeldung synonym auch als Pneumatik-Aktor bezeichnet. Allerdings soll die Erfindung nicht darauf beschränkt sein, sondern wird durch die beigefügten Ansprüche definiert.

Um den Aktor in optimaler Weise zur Dosierstoffabgabe anzusteuern, grenzt die oben erwähnte Bohrung des Aktorraums wie gesagt bevorzugt unmittelbar, insbesondere gas- und/oder flüssigkeitsdicht, an das Steuerventil der Aktoreinheit an. Das Steuerventil ist vorzugsweise ausgebildet, eine Zuführung von Druckmedium in den Aktorraum und eine Abführung von Druckmedium aus dem Aktorraum zu steuern und/oder zu regeln. Dazu ist das Steuerventil bevorzugt mit einer Steuer- und/oder Regeleinheit des Dosiersystems gekoppelt. Das Steuerventil kann z. B. mittels eines Magnetventils realisiert sein. Vorzugsweise kann das Steuerventil mittels eines 3/2-Wege-Ventils realisiert sein (z. B. Ruhestellung offen). Alternativ könnte das Steuerventil z. B. auch zwei 2/2-Wege-Ventile umfassen. Das Steuerventil kann auch als Pneumatikventil bezeichnet werden.

Bevorzugt kann das Steuerventil so in der Aktoreinheit angeordnet sein, dass ein erster Anschluss (Arbeitsanschluss) des Steuerventils (gasdicht) mit der Bohrung des Aktorraums zusammenwirkt, wobei der Aktorraum mittels dieses Anschlusses mit Druckmedium gefüllt werden kann und auch wieder entleert werden kann. Vorzugsweise ist ein zweiter Anschluss (Druckluftanschluss) des Steuerventils funktional mit einer Druckluftversorgung des Dosiersystems gekoppelt. Ein dritter Anschluss (Entlüftungsanschluss) des Steuerventils kann mit einem Entlüftungsbereich der Aktoreinheit gekoppelt sein, wie später erläutert wird. Vorzugsweise kann der Arbeitsanschluss je nach Ansteuerung des Steuerventils entweder mit dem Druckluftanschluss oder dem Entlüftungsanschluss zusammenwirken. Um den Aktorraum mittels des Steuerventils im Betrieb mit einer ausreichenden Menge Druckmedium zu versorgen, kann das Gehäuse des Dosiersystems ein internes Druck-Reservoir bzw. einen Druck-Tank für das unter Druck stehende Druckmedium umfassen. Bevorzugt kann dieser Druck-Tank im Gehäuse des Dosiersystems gegenüber anderen Gehäusebereichen abgegrenzt bzw. isoliert ausgebildet sein. Der Druck-Tank kann zumindest eine Zuführöffnung für Druckmedium in den Druck-Tank hinein und eine Abführöffnung für Druckmedium aus dem Druck-Tank hinaus, insbesondere zur Zuleitung in das Steuerventil, umfassen. Vorzugsweise kann der Druck-Tank so bemessen sein, dass er eine ausreichende Menge an Druckmedium für zumindest 250 bevorzugt zumindest 2000 besonders bevorzugt zumindest 10000 Auslenkungen der Membran enthalten kann. Vorzugsweise kann der Druck des Druckmediums im Druck-Reservoir zumindest 2 bar, bevorzugt zumindest 3 bar und besonders bevorzugt zumindest 5 bar betragen. Bevorzugt sollte der Druck höchstens 1000 bar, besonders bevorzugt höchstens 20 bar und ganz besonders bevorzugt höchstens 10 bar betragen.

Der Druck-Tank kann mit einer externen Druckluftversorgung des Dosiersystems gekoppelt sein. Beispielsweise kann dem Druck-Reservoir mittels der Zuführöffnung ein komprimiertes Druckmedium zugeführt werden, z. B. indem eine externe Druckmedium-Zuführung an eine entsprechende Koppelstelle des Gehäuses des Dosiersystems angeschlossen ist. Vorzugsweise kann im Druck-Tank, auch während des Betriebs des Dosiersystems, ein vorgebbarer Druck (Solldruck) im Wesentlichen konstant aufrechterhalten werden.

Für einen möglichst effizienten Betrieb des Pneumatik-Aktors kann das Druck-Reservoir in einem Inneren des Gehäuses direkt an das Steuerventil der Aktoreinheit angrenzen. Bevorzugt ist das Druck-Reservoir so im Gehäuse des Dosiersystems angeordnet, dass das Druckmedium aus dem Druck-Tank auf möglichst kurzem Weg direkt in den Aktorraum einströmen kann. Mit anderen Worten kann das Druck-Reservoir möglichst nah am "Bedarfspunkt" angeordnet sein. Bevorzugt ist die Abführöffnung des Druck-Tanks direkt mit dem Druckluftanschluss des Steuerventils (gasdicht) gekoppelt.

Vorteilhafterweise stellt das Druck-Reservoir also einen Dosiersystem-internen "Druckmedium-Puffer" dar, um besonders bei hohen Dosierfrequenzen einen gepulsten Verbrauch an Druckmedium zu dämpfen. Üblicherweise haben Dosiersysteme mit Pneumatik-Aktoren zu diesem Zweck einen externen Druck-Tank. Allerdings kann es bereits auf dem Weg von dem externen Druck-Tank bis zum Aktor auf Grund von Leitungsverlusten zu einem Abfall des Drucks im Druckmedium kommen, so dass der Aktorraum nicht mit einem gewünschten, insbesondere konstanten, Druck befüllt wird. Des Weiteren kann der Druck mit dem der Aktor befüllt wird - auch bezeichnet als Fülldruck des Aktors - einen maßgeblichen Einfluss auf die Dosiergenauigkeit des Dosiersystems haben und diese gegebenenfalls nachteilig beeinflussen, wie später erläutert wird.

Bei dem beschriebenen Dosiersystem ist dagegen der "Druckmedium-Puffer" in unmittelbarer Nähe zum Aktor angeordnet, so dass zwischen Druck-Tank und Aktorraum keine Leitung nötig ist. Damit wird gewährleistet, dass der Aktorraum auch bei sehr hohen Taktfrequenzen stets mit einem Druckmedium mit einem bestimmten Solldruck gefüllt wird. Dies wirkt sich einerseits wie gesagt positiv auf die Dosiergenauigkeit aus.

Andererseits können mittels dieser Konstruktion aber auch deutlich höhere Taktfrequenzen als bei herkömmlichen Dosiersystemen mit Pneumatik-Aktoren erreicht werden, da auch bei sehr hohen Taktfrequenzen keine Leitungsverluste zwischen Druck-Tank und Pneumatik-Aktor auftreten. Während bisher Dosierfrequenzen von bis zu ca. 330Hz möglich sind, ermöglicht der beschriebene Aufbau Dosierfrequenzen von 600Hz und mehr. Grundsätzlich erlaubt der interne "Druckmedium-Puffer" auch noch höhere Taktfrequenzen (>700Hz), wobei in dieser Hinsicht das Steuerventil auf Grund von Wärmeentwicklung den geschwindigkeitslimitierenden Faktor darstellt.

Um den vorteilhaften Effekt des internen "Druckmedium-Puffers" noch weiter zu verbessern, kann das Dosiersystem vorzugsweise zusätzlich zu dem internen Druck-Tank noch einen weiteren gegebenenfalls größeren externen Druck-Tank umfassen, z. B. in der externen Druckmedium-Zuführung.

Das Konzept des internen Druck-Tanks kann gewinnbringend dadurch ergänzt werden, dass im Druck-Reservoir zumindest ein Drucksensor so angeordnet ist, dass ein Druck des Druckmediums im Druck-Reservoir gemessen wird. Beispielsweise könnte der Drucksensor in einer Wandung des Druck-Tanks realisiert sein.

Vorzugsweise ist der Drucksensor möglichst nah am Pneumatik-Aktor angeordnet. Der Drucksensor kann bevorzugt zur Weitergabe von Messdaten mit der Steuer- und/oder Regeleinheit des Dosiersystems gekoppelt sein. Die Steuer- und/oder Regeleinheit kann einerseits als direkter Bestandteil eines Dosiersystems ausgebildet sein oder andererseits separat gegenüber dem Dosiersystem realisiert sein. Eine dritte Möglichkeit ist, dass die Steuer- und/oder Regeleinheit separat ausgebildet ist und mehreren Dosiersystemen gleichzeitig zugeordnet ist, um diese separat voneinander zu steuern.

Der Begriff der Steuerung wird im Folgenden als Synonym für eine Steuerung und/oder Regelung verwendet. Das bedeutet, auch wenn von einer Steuerung gesprochen wird, kann die Steuerung zumindest einen Regelungsprozess umfassen. Bei einer Regelung wird im Allgemeinen eine Regelgröße (als Istwert) fortlaufend erfasst und mit einer Führungsgröße (als Sollwert) verglichen. Üblicherweise erfolgt die Regelung auf eine solche Art und Weise, dass eine Angleichung der Regelgröße an die Führungsgröße erfolgt. Das bedeutet, dass sich die Regelgröße (Istwert) im Wirkungsweg des Regelkreises fortlaufend selbst beeinflusst.

Um den Druck im Druck-Reservoir zu steuern, kann das Dosiersystem zumindest einen ansteuerbaren Druckregler umfassen. Bevorzugt ist der Druckregler dazu ausgebildet, einen Druck des Druckmediums im Druck-Reservoir in Abhängigkeit eines Eingangsparameters zu steuern und/oder zu regeln, vorzugsweise mittels einer Steuerung und/oder Regelung eines Drucks eines in das Gehäuse des Dosiersystems bzw. in das Reservoir einströmenden Druckmediums.

Der Druck im Druck-Reservoir, also der Druck der vor dem Steuerventil anliegt, wird auch als Versorgungsdruck des Aktors bezeichnet. Der Versorgungsdruck bestimmt, mit welchem Druck der Aktorraum maximal befüllt werden kann, d. h. welchen Druck das Druckmedium beim Einströmen in den Aktorraum höchstens haben kann. Im einfachsten Fall kann der Versorgungsdruck auch einem Aktor-Fülldruck entsprechen. Der Aktor-Fülldruck entspricht dem Druck, den das Druckmedium im (gefüllten) Aktorraum, z. B. während einer Auslenkung der Membran tatsächlich hat. Je nach Ausgestaltung des Dosiersystems ist es aber auch möglich, dass der Aktor-Fülldruck vom Versorgungsdruck abweicht, wie später erläutert wird. Daher kann der Druckregler vorzugsweise auch dazu ausgebildet sein, einen Druck, mit dem der Aktor mit Druckmedium gefüllt wird (Aktor-Fülldruck), in Abhängigkeit eines Eingangsparameters zu steuern und/oder zu regeln.

Der Druckregler kann einerseits mechanisch bzw. manuell zu bedienen sein. Vorzugsweise kann dann ein Eingangsparameter an einen Bediener des Dosiersystems übermittelt werden, wobei der Bediener den Druckregler dann so einstellt, dass ein Solldruck im Druck-Reservoir erreicht wird.

Bevorzugt kann auch ein elektronischer Druckregler zum Einsatz kommen. Besonders bevorzugt kann der Druckregler mittels der Steuer- und/oder Regeleinheit des Dosiersystems, insbesondere unter Berücksichtigung von Eingangsparametern, gesteuert werden. Ungeachtet der konkreten Ausgestaltung (mechanisch und/oder elektronisch) kann der Druckregler vorzugsweise am Gehäuse des Dosiersystems und/oder in einer externen Druckmedium-Zuleitung angeordnet sein.

Bevorzugt kann der (mechanische bzw. elektronische) Druckregler so gesteuert bzw. in Abhängigkeit eines Eingangsparameters so geregelt werden, dass im Betrieb des Dosiersystems eine bestimmte, z. B. eine konstante, Geschwindigkeit des Ausstoßelements (Stößelgeschwindigkeit) bei der Ausstoßbewegung erreicht wird.

Ein Eingangsparameter der Steuerung bzw. Regelung kann beispielsweise ein aktueller Druck im Druck-Reservoir sein. Vorzugsweise können die Messdaten des Drucksensors als Eingangsparameter (Istwerte) mittels der Steuer- und/oder Regeleinheit im Betrieb kontinuierlich mit einem vorgebbaren Sollwert verglichen werden. Die Steuerung des Druckreglers erfolgt dann bevorzugt so, dass im Betrieb kontinuierlich ein Solldruck im internen Druck-Tank vorliegt bzw. eine konstante Stößelgeschwindigkeit erreicht wird.

Vorteilhafterweise kann mittels des Drucksensors und des internen Druck-Reservoirs im Zusammenspiel mit der Steuer- und/oder Regeleinheit die Dosiergenauigkeit des Dosiersystems weiter verbessert werden. Ein mit entscheidender Faktor für eine je Stößelhub ausgestoßene Menge an Dosierstoff ist die Stößelgeschwindigkeit, insbesondere beim Einschlag in die Düse bzw. in deren Dichtsitz. Vorzugsweise kann daher die Stößelgeschwindigkeit (bei der Ausstoßbewegung) im Betrieb auf einen, gegebenenfalls konstanten, Sollwert eingestellt werden. Die Stößelgeschwindigkeit hängt maßgeblich vom Aktor-Fülldruck ab.

In dieser Hinsicht bedingt ein höherer Aktor-Fülldruck eine höhere Beschleunigungskraft der Membran was zu einer höheren Geschwindigkeit des Stößels führt. Ein geringer Aktor-Fülldruck führt entsprechend zu einer langsameren Stößelgeschwindigkeit beim Ausstoßprozess. Daher können Druckschwankungen beim Befüllvorgang des Aktorraums einen nachteiligen Einfluss auf die Dosiergenauigkeit haben. Vorteilhafterweise kann mittels einer Steuerung und/oder Regelung des Drucks im Druck-Tank und/oder des Aktor-Fülldrucks die Stößelgeschwindigkeit auf einen vorgebbaren Wert eingestellt und im Betrieb z. B. konstant gehalten werden, um auch bei sehr dynamischen und/oder hohen Dosieranforderungen die Dosiergenauigkeit weiter zu erhöhen. Beispielsweise könnten mittels dieser Steuerung bzw. Regelung Druckschwankungen in der Versorgungsleitung kompensiert werden.

Um die Dosiergenauigkeit noch weiter zu verbessern, kann das Dosiersystem zumindest einen Sensor zur Messung einer Geschwindigkeit einer Bewegung des Ausstoßelements umfassen. Vorzugsweise kann ein Geschwindigkeitssensor in einem Bereich des starren Aktor-Grundkörpers angeordnet sein. Bevorzugt kann der Sensor in einem der Oberseite der Membran gegenüberliegenden Bereich des Aktor-Grundkörpers angeordnet sein, also "oberhalb" der Membran. Vorzugsweise können der Geschwindigkeitssensor und das Ausstoßelement, z. B. ein Stößelkopf, auf einer gedachten (vertikalen) Linie angeordnet sein. Bevorzugt ist der Geschwindigkeitssensor mit der Steuereinheit gekoppelt.

Der Geschwindigkeitssensor ist vorzugsweise dazu ausgebildet, eine Geschwindigkeit des Ausstoßelements während der gesamten Ausstoßbewegung und/oder der gesamten Rückzugsbewegung des Ausstoßelements zu erfassen. Beispielsweise kann der Geschwindigkeitssensor mittels eines Positionssensors (Hubsensor) realisiert sein, der dazu ausgebildet ist, eine Stößelposition in Abhängigkeit der Zeit zu erfassen. Bevorzugt kann der Geschwindigkeitssensor mittels eines Hall-Sensors realisiert sein. Vorzugsweise kann dann ein an der Membran anliegender "Kopfbereich" des Ausstoßelements einen Magneten umfassen.

Alternativ könnte der Geschwindigkeitssensor einen kapazitiven Abstandssensor umfassen. Beispielsweise könnten der Abstandssensor und die Membran (als bewegliche Gegenfläche) einen elektrischen Kondensator ausbilden, z. B. indem die Membran nach der Art einer Kondensatorplatte ausgebildet ist.

Vorteilhafterweise können die Messwerte des Geschwindigkeitssensors der Steuereinheit als weiterer Eingangsparameter zugeführt werden. Die Geschwindigkeits-Messwerte können alternativ oder zusätzlich zu den Messwerten des Drucksensors dazu genutzt werden, den Versorgungsdruck des Aktors und/oder den Aktor-Fülldruck zu steuern und/oder zu regeln, um im Betrieb z. B. eine konstante Stößelgeschwindigkeit, insbesondere beim Einschlag in den Dichtsitz der Düse, zu erreichen. Beispielsweise können mittels dieser Steuerung bzw. Regelung Schwankungen in der Beschaffenheit des Dosierstoffs kompensiert werden.

Eine weitere -alternative oder zusätzliche- Möglichkeit zur Einstellung der Stößelgeschwindigkeit ist, den Befüllvorgang des Aktors mittels einer Drosselvorrichtung zu steuern. Vorzugsweise kann das Dosiersystem, z. B. das Steuerventil, dazu zumindest eine ansteuerbare Drosseleinrichtung umfassen. Die Drosseleinrichtung kann dazu ausgebildet sein, einen Druck des Druckmediums im Aktor, insbesondere im Aktorraum, in Abhängigkeit eines Eingangsparameters zu steuern und/oder zu regeln. Bevorzugt kann die Drosseleinrichtung dazu ausgebildet sein, einen Druck im Aktor, insbesondere in Abhängigkeit eines Eingangsparameters, dynamisch zu steuern und/oder zu regeln. Vorzugsweise kann die Drosseleinrichtung so angesteuert werden, dass sich ein Druck im Aktor während einer (ersten) Ausstoßbewegung vom Druck im Aktor während einer (zweiten) nachfolgenden Ausstoßbewegung unterscheidet, d. h. der Druck im Aktor kann "von Puls zu Puls" verändert werden.

Vorzugsweise kann die Drosseleinrichtung zumindest ein steuerbares Proportionalventil und/oder einen steuerbaren Druckregler umfassen. Die Drosseleinrichtung kann dazu ausgebildet sein, einen Volumenstrom bzw. eine Durchflussrate des in den Aktorraum einströmenden Druckmediums zu steuern und/oder zu regeln. Beispielsweise kann die Drossel im Arbeitsanschluss des Steuerventils und/oder in der Bohrung des Aktor-Grundkörpers angeordnet sein. Vorzugsweise kann je nach Ansteuerung der Strömungsquerschnitt reduziert oder auch wieder vergrößert werden, z. B. entsprechend eines maximal möglichen Strömungsquerschnitts. Alternativ könnte auch jeweils ein steuerbares Proportionalventil im Druckluftanschluss bzw. im Entlüftungsanschluss des Steuerventils angeordnet sein.

Weiterhin kann die Drossel alternativ oder zusätzlich dazu ausgebildet sein bzw. so angesteuert werden, dass der Einstrom von Druckmedium in den Aktorraum zu einem bestimmten Zeitpunkt vollständig unterbrochen wird. Vorzugsweise könnte das Proportionalventil im Arbeitsanschluss (vollständig) geschlossen werden, sobald während der Befüllung ein bestimmter Druck im Aktorraum anliegt. Bevorzugt kann die Drossel so gesteuert werden, dass im Betrieb ein bestimmter, z. B. ein höchstzulässiger, Druck im Aktorraum nicht überschritten wird. Das kann unter Umständen dazu führen, dass der Druck des gefüllten Aktors (zur Auslenkung der Membran) geringer ist als der Versorgungsdruck. Zur Messung des Drucks im Aktorraum kann das Dosiersystem einen Drucksensor aufweisen.

Die Drosseleinrichtung kann mittels einer mechanischen bzw. manuellen Drossel realisiert sein. Vorzugsweise kann zumindest ein Eingangsparameter an einen Bediener des Dosiersystems übermittelt werden, wobei der Bediener die Drossel (welche auch als Expansionsventil bezeichnet werden könnte) dann so einstellt, dass ein bestimmter (Soll-)Durchfluss durch die Drossel und damit eine gewünschte Stößelgeschwindigkeit während der Ausstoßbewegung des Stößels erreicht wird.

Bevorzugt kann die Drosseleinrichtung mittels einer elektronischen Drossel realisiert sein, z. B. einem Proportionalventil. Bevorzugt kann die Drossel von der Steuereinheit in Abhängigkeit eines Eingangsparameters, z. B. einer tatsächlichen Stößelgeschwindigkeit, so angesteuert werden, dass ein bestimmter Volumenstrom bzw. ein gewünschter Druck im Aktorraum erreicht wird. Alternativ oder zusätzlich kann die Drosseleinrichtung so gesteuert werden, dass ein bestimmter Druck im Aktor, insbesondere während der Befüllung, nicht überschritten wird. Besonders bevorzugt kann die Drosseleinrichtung abhängig von zumindest einem Eingangsparameter so gesteuert werden, dass eine, z. B. konstante, vorgebbare Stößelgeschwindigkeit bei der Ausstoßbewegung und/oder Rückzugsbewegung erreicht wird.

Vorteilhafterweise lässt sich mittels der steuerbaren Drosseleinrichtung die Stößelgeschwindigkeit bei der Ausstoßbewegung im Betrieb auf einen konstanten Wert einstellen. Die steuerbare Drosseleinrichtung stellt also eine zweite alternative oder zusätzliche Variante dar, um die Stößelgeschwindigkeit im Betrieb konstant zu halten und somit die Dosiergenauigkeit weiter zu verbessern.

Um das Dosierergebnis weiter zu verbessern kann das Dosiersystem dazu ausgebildet sein, ein bestimmtes Geschwindigkeitsprofil des Ausstoßelements während einer jeweiligen Ausstoßbewegung und/oder der Rückzugsbewegung einzustellen. Die dynamische Steuerung der Geschwindigkeit des Ausstoßelements wird auch als Flankensteuerung bezeichnet. Bevorzugt kann das Dosiersystem, vorzugsweise das Steuerventil, zumindest eine Drosseleinrichtung umfassen, die dazu ausgebildet ist, einen Druckverlauf während einer Befüllung des Aktors mit Druckmedium und/oder während einer Entleerung bzw. Entlüftung des Aktors zu steuern und/oder zu regeln. Vorzugsweise kann die Steuerung und/oder Regelung in Abhängigkeit zumindest eines Eingangsparameter erfolgen.

Bevorzugt kann die Drosseleinrichtung hierfür dazu ausgebildet sein, durch eine lokale (variierbare) Verengung eines Strömungsquerschnitts eine Durchflussrate des durchfließenden Fluids so einzustellen, dass ein Befüllvorgang des Aktorraums zeitlich gesteuert werden kann. Das bedeutet, mittels der Drossel lässt sich der Druckanstieg im Aktorraum zeitlich steuern (zeitliche Steuerung des Druckverlaufs). Vorzugsweise kann die Drossel dazu ausgebildet sein, die Durchflussrate während einer jeweiligen Ausstoßbewegung und/oder während einer jeweiligen Rückzugsbewegung des Ausstoßelements dynamisch zu steuern bzw. zu regeln.

Bevorzugt kann die Drosseleinrichtung so gesteuert werden, dass der Druckanstieg im Aktorraum dynamisch bzw. variabel erfolgt, d. h. der Druck im Aktorraum steigt nicht konstant bzw. linear an. Als Druckverlauf wird hier der Druck im Aktor, insbesondere im Aktorraum, als Funktion der Zeit (während der Befüllung bzw. Entlüftung) bezeichnet. Bevorzugt kann die Drosseleinrichtung so gesteuert werden, dass die Geschwindigkeit des Stößels während der Ausstoßbewegung variiert, d. h. dass der Stößel bei einer einzigen Ausstoßbewegung zwei oder mehr unterschiedliche Geschwindigkeiten hat bzw. auf zwei oder mehr unterschiedliche Geschwindigkeiten beschleunigt wird. Vorzugsweise kann die Geschwindigkeit des Stößels während der gesamten Stößelbewegung, also von der Ruheposition bis zum Einschlag in die Düse, gesteuert und/oder geregelt werden.

Die Drosseleinrichtung kann mittels eines ansteuerbaren Proportionalventils realisiert sein. Für eine möglichst hochaufgelöste Regelung eines Geschwindigkeitsverlaufs des Stößels beim Ausstoßprozess kann bevorzugt zumindest ein z. B. piezobetriebenes Stellglied mit variablem Durchfluss verwendet werden. Bevorzugt ist das elektronisch ansteuerbare piezobetriebene Stellglied Teil der Drosseleinrichtung und kann mittels der Steuereinheit angesteuert werden, um den Volumenstrom (Durchflussrate) des in den Aktor einströmenden Druckmediums und/oder des aus dem Aktor ausströmenden Druckmediums im Wesentlichen verzögerungsfrei zu steuern. Beispielsweise könnte das Steuerventil so ausgebildet sein, dass mittels des Stellglieds ein Strömungsquerschnitt des Arbeitsanschlusses des Steuerventils (z. B. ein 3/2-Wege-Ventil oder zwei 2/2-Wege-Ventile) während des Einströmens und/oder Ausströmens von Druckmedium in den Aktor bzw. aus dem Aktor im Wesentlichen in Echtzeit steuerbar (veränderbar) ist.

Alternativ ist es auch möglich, dass das Steuerventil anstelle eines 3/2-Wege-Ventils zwei separat steuerbare Proportionalventile umfasst, womit gleichzeitig eine Drosseleinrichtung realisiert wird. Dann könnte ein erstes Proportionalventil zum (zeitlich gesteuerten) Befüllen des Aktorraums und ein zweites Proportionalventil zum (zeitlich gesteuerten) Entlüften des Aktorraums genutzt werden, wobei die beiden Proportionalventile dieselbe oder unterschiedliche Bohrungen des Aktorraums nutzen können. Hierdurch kann der Druckverlauf beim Befüllen und entlüften separat gesteuert bzw. geregelt werden.

Ein Eingangsparameter, in dessen Abhängigkeit die Regelung erfolgt, kann z. B. ein Messsignal des Geschwindigkeitssensors sein.

Bevorzugt kann als ein Eingangsparameter auch ein vorgebbares Geschwindigkeitsprofil des Stößels dienen, welches z. B. abhängig von der Beschaffenheit des Dosierstoffs und/oder der Dosieranforderung erstellt wird und in der Steuereinheit hinterlegt sein kann. Vorzugsweise kann dann die Steuereinheit in Abhängigkeit der tatsächlichen Geschwindigkeit des Stößels den Druck während der Befüllung des Aktors so steuern (anpassen), dass ein gewünschtes Geschwindigkeitsprofil beim Ausstoßprozess erreicht wird. Beispielsweise könnte die Drosseleinrichtung so gesteuert werden, dass der Stößel ausgehend von seiner Ruheposition mittels der Membran zunächst auf eine sehr hohe Geschwindigkeit beschleunigt wird (starker Einstrom von Druckmedium in den Aktor, d. h. schneller Druckanstieg im Aktorraum) um eine Scherung des Dosierstoffs zu erreichen. In einer zweiten Phase der Ausstoßbewegung könnte die Stößelgeschwindigkeit dann reduziert werden (verringerter Einstrom von Druckmedium in den Aktor, d. h. langsamerer Druckanstieg im Aktorraum), um ein sauberes Ausstoßen des Dosierstoffs aus der Düse zu erreichen.

Vorteilhafterweise kann das Dosiersystem, insbesondere mittels einer derart ausgestalteten Drosseleinrichtung, so angesteuert werden, um den Druckverlauf und/oder den zeitlichen Verlauf der Füllung des Aktors zu steuern. Damit lässt sich ein gewünschter Geschwindigkeitsverlauf der Stößelbewegung während jeder Phase der Ausstoßbewegung einstellen (auch bezeichnet als Steuerung der Flanken). Vorteilhafterweise kann damit die Dosiergenauigkeit weiter verbessert werden, insbesondere indem äußere Einflussfaktoren effektiv ausgeglichen werden können. Beispielsweise können Schwankungen im Dosiermedium kompensiert werden, die sich z. B. chargenabhängig (Viskosität), temperaturabhängig oder aufgrund eines Materialalters (Aushärteprozesse bei Klebstoffen) ergeben können. Weiterhin können auch geringe Fertigungstoleranzen oder Verschleißprozesse durch eine Steuerung der Flanken ausgeglichen werden.

Die Drosseleinrichtung kann wie gesagt auch dazu ausgebildet sein bzw. so angesteuert werden, um auch bei der Entlüftung des Aktors eine Regelung des Druckverlaufs und/oder des zeitlichen Verlaufs der Entleerung zu bewirken. Das bedeutet, auch bei der Rückzugsbewegung kann der Stößel zwei oder mehr unterschiedliche Geschwindigkeiten bzw. einen definierten Geschwindigkeitsverlauf haben. Die Regelung kann vorzugsweise in Abhängigkeit eines Eingangsparameters erfolgen, z. B. Messdaten des Geschwindigkeitssensors, um ein vorgebbares Geschwindigkeitsprofil des Stößels zu erreichen. Vorteilhafterweise kann eine Rückzugsgeschwindigkeit des Stößels so bestimmt werden, dass bei der Rückzugbewegung keine Luft durch die Düsenöffnung der Düse gesogen wird, wobei die Bildung von Luftblasen in einem nachfolgend aus der Düse auszustoßenden Tropfen des Dosierstoffs vermieden werden kann.

Bevorzugt kann das Dosiersystem weiterhin dazu ausgebildet sein, eine unterbrechungsfreie Einsatzdauer des Dosiersystems zu erhöhen. Dazu kann die Aktoreinheit ausgebildet sein, das aus dem Aktor bzw. aus dem Aktorraum ausströmende Druckmedium als Kühlmedium zur Kühlung des Steuerventils zu verwenden. Die Entlüftung bzw. Entleerung des Aktorraums erfolgt vorzugsweise mittels des Entlüftungsanschlusses des Steuerventils, wobei der Entlüftungsanschluss in einen Entlüftungsbereich der Aktoreinheit mündet.

Das Steuerventil, z. B. ein Magnetventil, erzeugt im Betrieb mit steigender Taktfrequenz zunehmend Wärme, wobei eine Überhitzung zu einem Ausfall des Steuerventils führen kann. Vorzugsweise ist der Entlüftungsbereich daher als Hohlraum so im Gehäuse des Dosiersystems ausgebildet, dass er das gesamte Steuerventil von außen umschließt bzw. einfasst. Bevorzugt kann das Druckmedium so am Steuerventil vorbei geführt werden, dass mittels des Druckmediums möglichst viel Wärme von einer Oberfläche des Steuerventils abgeführt wird. Das Druckmedium, z. B. komprimierte Raumluft, wird infolge der Passage des Aktors kaum erwärmt und kann daher als Kühlmedium eingesetzt werden. Der Entlüftungsbereich, welcher auch als Kühlbereich bezeichnet werden könnte, bildet also mit dem Druckmedium eine Kühleinrichtung des Dosiersystems aus. Zur Abführung des Druckmediums aus dem Entlüftungsbereich kann das Gehäuse eine Bohrung aufweisen.

Für eine besonders effektive Kühlung des Steuerventils könnte das Druckmedium vor dem Eintritt in das Gehäuse auf eine bestimmte Temperatur aktiv abgekühlt werden, beispielsweise mittels einer Kälteerzeugungsvorrichtung. Damit könnte das Steuerventil dauerhaft unterhalb einer kritischen Betriebstemperatur gehalten werden. Weiterhin wäre auch eine Regelung der aktiven Kühlung denkbar, z. B. indem das Steuerventil einen Temperatursensor umfasst und entsprechende Messwerte an die Steuereinheit übergibt. Die Steuereinheit könnte dann die Kälteerzeugungsvorrichtung in Abhängigkeit der Messwerte so ansteuern, dass die Kälteerzeugungsvorrichtung ein entsprechend stark abgekühltes Druckmedium zur Verfügung stellt, um die Temperatur des Steuerventils unterhalb eines kritischen Werts zu halten.

Vorteilhafterweise lässt sich mittels dieser Kühleinrichtung erreichen, dass das Steuerventil im Betrieb zuverlässig unterhalb einer kritischen Arbeitstemperatur gehalten wird, wobei die Zuverlässigkeit des Dosiersystems verbessert wird. Damit ist es einerseits möglich, dass Dosiersystem auch bei hohen Außentemperaturen zu betreiben. Andererseits kann die Taktfrequenzen des Dosiersystems gegenüber herkömmlichen Dosiersystemen gesteigert werden, da auch bei sehr hohen Taktfrequenzen ausreichend Wärmenergie vom Steuerventil abgeführt werden kann.

Um die Zuverlässigkeit des Dosiersystems weiter zu verbessern, kann im Bereich zwischen der Aktor-Membran und einer Stößeldichtung ein Druck vorgehalten werden, der im Wesentlichen einem Kartuschendruck (Druck des Dosierstoffs in einer Dosierstoffkartusche) entspricht. Die Stößeldichtung umschließt den Stößel und ist als Teil der Fluidikeinheit des Dosiersystems realisiert. Vorzugsweise liegt die Stößeldichtung einer Austrittsöffnung der Düse gegenüber, wobei die Stößeldichtung eine Düsenkammer der Düse nach oben hin begrenzt. Dadurch, dass auf beiden Seiten der Stößeldichtung im Wesentlichen der gleiche Druck herrscht, wird der Tendenz entgegengewirkt, dass im Betrieb Dosierstoff durch die Dichtung gedrückt wird. Vorteilhafterweise kann damit die Langlebigkeit der Dichtung erhöht werden.

Alternativ kann zwischen der Aktor-Membran, vorzugsweise deren Unterseite, und der Stößeldichtung ein Unterdruck, insbesondere ein Vakuum, vorgehalten werden. Vorteilhafterweise kann damit die Leistung des Aktors bzw. des Dosiersystems erhöht werden, da das Vakuum die Auslenkung der Membran in Richtung Düse erleichtert bzw. unterstützt. Das kann insbesondere bei schwierig zu dosierenden Medien von Vorteil sein kann, z. B. bei Dosierstoffen mit einer hohen Viskosität.

Um die zuvor erläuterten vorteilhaften Ausgestaltungen des Dosiersystems im Betrieb gewinnbringend umsetzen zu können, wird bei einem Verfahren zur Steuerung des Dosiersystems (Steuerungsverfahren) vorzugsweise der Druck des in das Gehäuse des Dosiersystems bzw. in den internen Druck-Tank einströmenden Druckmediums mittels des Druckreglers des Dosiersystems in Abhängigkeit zumindest eines Eingangsparameters so gesteuert und/oder geregelt, dass die Geschwindigkeit des Ausstoßelements bei einer Ausstoßbewegung, insbesondere beim Einschlag in die Düse, einem Sollwert entspricht. Bevorzugt wird der Druckregler dazu mittels der Steuereinheit des Dosiersystems angesteuert.

Bevorzugt wird der Druck des in den Aktor bzw. Aktorraum einströmenden Druckmediums und/oder der Druck des aus dem Aktor bzw. Aktorraum ausströmenden Druckmediums mittels der Drosseleinrichtung des Dosiersystems in Abhängigkeit zumindest eines Eingangsparameters so gesteuert und/oder geregelt, dass die Geschwindigkeit des Ausstoßelements während einer jeweiligen Ausstoßbewegung und/oder Rückzugsbewegung einem Sollwert entspricht. Vorzugsweise kann die Steuereinheit des Dosiersystems im Betrieb kontinuierlich Messwerte zumindest eines Sensors erhalten, z. B. vom Geschwindigkeitssensor, um einen Echtzeitvergleich der Messwerte (Istwert) mit einem vorgebbaren Sollwert durchzuführen. In Abhängigkeit dieser Überwachung wird die Drosseleinrichtung dann vorzugsweise so gesteuert, dass das Druckmedium mit einem solchen Volumenstrom in den Aktor einströmt bzw. daraus herausströmt, um eine gewünschte Stößelgeschwindigkeit bei der Ausstoßbewegung und/oder der Rückzugsbewegung zu erreichen.

Weiterhin kann die Steuereinheit die Drosseleinrichtung so ansteuern, dass eine Geschwindigkeit des Ausstoßelements während einer einzigen Ausstoßbewegung und/oder während einer einzigen Rückzugsbewegung variiert wird. Vorzugsweise kann das Ausstoßelement für eine einzige jeweilige Bewegung auf zwei oder mehr unterschiedliche Geschwindigkeiten beschleunigt werden. Vorzugsweise kann die Steuereinheit in Abhängigkeit zumindest eines Eingangsparameters, z. B. Geschwindigkeitsmessdaten, die Durchflussrate des Druckmediums durch die Drosseleinrichtung so steuern, dass ein bestimmtes Geschwindigkeitsprofil des Stößels bei der Ausstoß- und/oder Rückzugsbewegung erreicht wird. Beispielsweise kann das Expansionsventil so gesteuert werden, dass der Aktor für eine (einzige) Ausstoßbewegung zunächst mit einem ersten Druck gefüllt wird, um eine erste Ausstoßgeschwindigkeit zu erreichen, und anschließend mit einem zweiten, davon sich unterscheidenden Druck gefüllt wird, um eine zweite Ausstoßgeschwindigkeit zu erreichen, welche sich von der ersten Ausstoßgeschwindigkeit unterscheiden kann.

Die Erfindung wird im Folgenden unter Hinweis auf die beigefügten Figuren anhand von Ausführungsbeispielen noch einmal näher erläutert. Dabei sind in den verschiedenen Figuren gleiche Komponenten mit identischen Bezugsziffern versehen. Die Figuren sind in der Regel nicht maßstäblich. Es zeigen schematisch:
Figur 1 eine im Schnitt dargestellte Ansicht eines Dosiersystems gemäß einer Ausführungsform der Erfindung,
Figur 2 Teile des Dosiersystems aus Figur 1 in vergrößerter Ansicht,
Figur 3 Teile des Dosiersystems aus Figur 1 und 2 in weiter vergrößerter Ansicht,
Figur 4 Teile eines im Schnitt dargestellten Dosiersystems, ähnlich Figur 3, gemäß einer weiteren Ausführungsform der Erfindung,
Figur 5 eine Darstellung einer Aktoreinheit des Dosiersystems gemäß einer Ausführungsform der Erfindung,
Figur 6 eine Darstellung des Dosiersystems aus Figur 1 in einer anderen Funktionsstellung,
Figur 7 eine Darstellung eines Steuerverfahrens für ein Dosiersystem gemäß einer Ausführungsform der Erfindung,
Figur 8 eine Darstellung eines Geschwindigkeitsverlauf einer möglichen Stößelbewegung gemäß einer Ausführungsform der Erfindung.

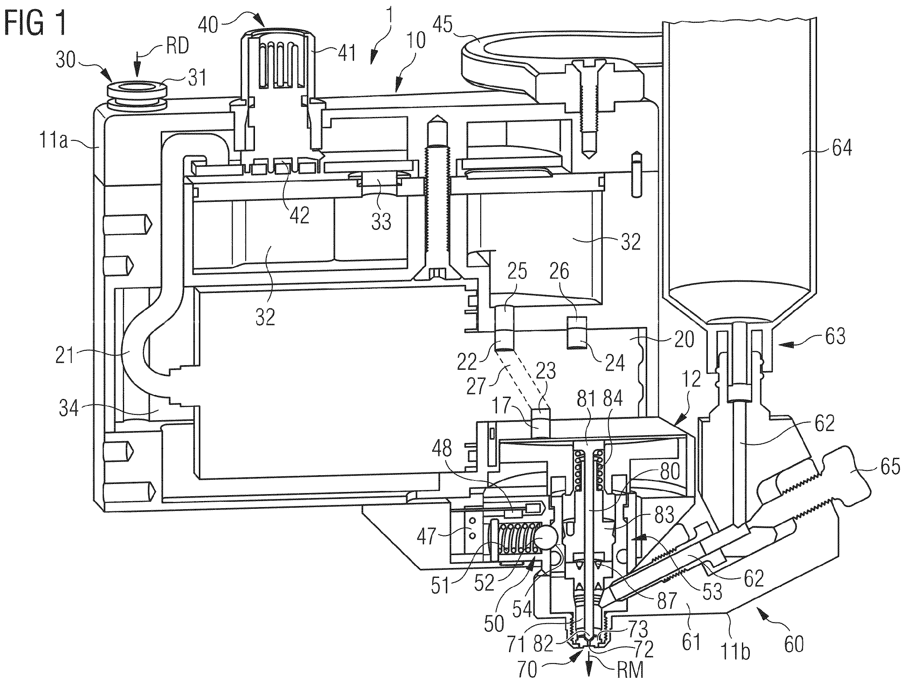

Anhand von Figur 1 wird nun ein konkretes Ausführungsbeispiel eines erfindungsgemäßen Dosiersystems 1 beschrieben. Das Dosiersystem 1 ist hier im Schnitt in der im bestimmungsgemäßen Betrieb des Dosiersystems 1 üblichen Lage bzw. Position dargestellt. Dabei befindet sich eine Düse 70 im unteren Bereich des Dosiersystems 1, sodass die Tropfen des Mediums in einer Ausstoßrichtung RM durch die Düse 70 nach unten ausgestoßen werden. Soweit im Folgenden die Begriffe unten und oben verwendet werden, beziehen sich diese Angaben daher immer auf eine solche, meist übliche Position des Dosiersystems 1. Dies schließt aber nicht aus, dass das Dosiersystem 1 in speziellen Anwendungen auch in einer anderen Position eingesetzt werden kann und die Tropfen beispielsweise seitlich ausgestoßen werden. Je nach Medium, Druck und genauer Konstruktion sowie Ansteuerung des gesamten Ausstoßsystems ist dies grundsätzlich auch möglich.

Das Dosiersystem 1 umfasst als wesentliche Komponenten eine Aktoreinheit 10 sowie eine damit gekoppelte Fluidikeinheit 60. Das hier gezeigte Dosiersystem 1 umfasst weiterhin eine Dosierstoff-Kartusche 64, welche an die Fluidikeinheit 60 gekoppelt ist.

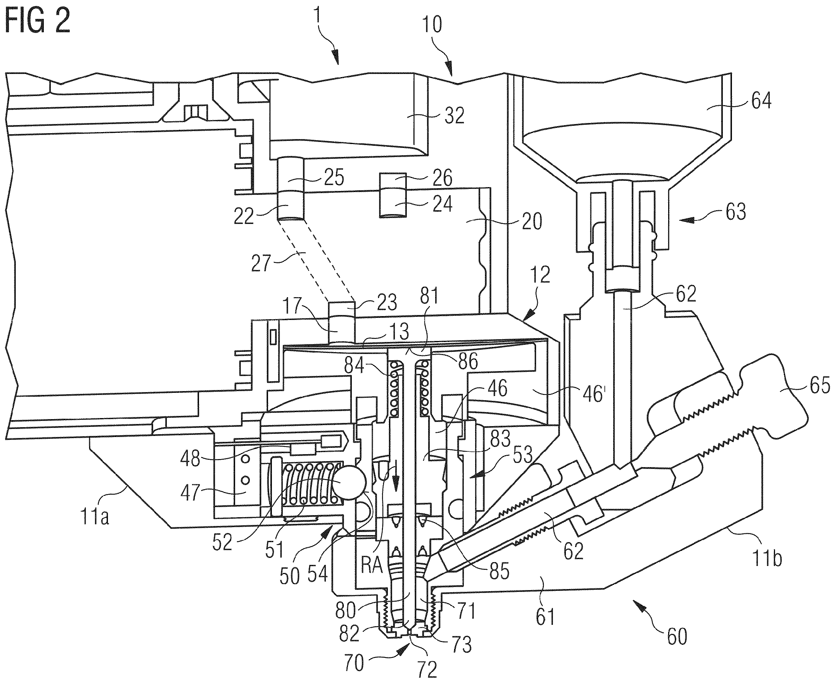

In dem hier gezeigten Ausführungsbeispiel des Dosiersystems 1 sind die Aktoreinheit 10 und die Fluidikeinheit 60 nach der Art von miteinander verkoppelbaren Steckkupplungsteilen zur Ausbildung einer Schnellkupplung realisiert. Vorteilhafterweise können die Aktoreinheit 10 und die Fluidikeinheit 60 damit werkzeuglos miteinander verkuppelt werden, um so das Dosiersystem 1 auszubilden. Die Schnellkupplung umfasst eine Kupplungsmechanik 50 mit einer Kupplungsfeder 51, die eine Kugel 52 konstant unter Vorspannung hält. Die Kupplungsfeder 51 und die Kugel 52 sind hier von einem (ersten) Aktoreinheit-Gehäuseblock 11a umfasst und bilden einen ersten Steckkupplungsteil aus. Dies wird besonders in Figur 2 deutlich, welche einen Ausschnitt des Dosiersystems aus Figur 1 in einer vergrößerten Ansicht zeigt.

Die Kupplungsmechanik 50 weist eine Anzahl von Kugelkalotten 54 auf (in Figur 2 nur eine gezeigt), in welche die Kugel 52 zur Kopplung einrasten kann. Die Kugelkalotten 54 sind in einem zweiten Steckkupplungsteil 53 der Fluidikeinheit 60 angeordnet, wobei die Fluidikeinheit 60 von einem (zweiten) Fluidikeinheit-Gehäuseblock 11b umfasst ist. Zur Kupplung können der erste Steckkupplungsteil (der Aktoreinheit 10) und der zweite Steckkupplungsteil (der Fluidikeinheit 60) entlang einer (virtuellen bzw. gedachten) Steckachse ineinander gesteckt und dabei in sich miteinander verkoppelt werden. Beispielsweise kann die Fluidikeinheit 60 entgegen einer Richtung RM (siehe Figur 1) in die Aktoreinheit 10 gesteckt werden und in einer passenden Drehstellung mit der Aktoreinheit 10 verkuppelt werden.

Die Kugelkalotten 54 sind so im zweiten Steckkupplungsteil 53 der Fluidikeinheit 60 angeordnet, dass verschiedene Rastposition möglich sind, d. h. es sind unterschiedliche Drehstellungen der Fluidikeinheit 60 um die Steckachse möglich. Durch die federnd vorgespannte Kugel 52 rastet der Steckkupplungsteil 53 in einer der mehreren möglichen Rastpositionen ein, um so das Dosiersystem 1 auszubilden.

Das Dosiersystem 1 umfasst hier also ein Gehäuse 11 mit den zwei erwähnten Gehäuseteilen (Gehäuseblöcken) 11a und 11b.

Es sei jedoch darauf hingewiesen, dass die jeweiligen Baugruppen 10, 60 auch fest miteinander verbunden sein können, z. B. mittels einer Fixierschraube, um so das Gehäuse 11 auszubilden.

Wie in Figur 1 erkennbar ist, umfasst die Aktoreinheit 10 im Wesentlichen alle Komponenten, die für den Antrieb bzw. die Bewegung eines Ausstoßelements 80, hier eines Stößel 80, in der Düse 70 sorgen, also z. B. einen Pneumatik-Aktor 12, um das Ausstoßelement 80 der Fluidikeinheit 60 betätigen zu können, ein Steuerventil 20, eine Steuereinheit (in Figuren 1 und 2 nicht gezeigt), um den Pneumatik-Aktor 12 ansteuern zu können und ähnliche Komponenten, wie nachfolgend erläutert wird.

Die Fluidikeinheit 60 umfasst neben der Düse 70 und einer Zuleitung 62 des Mediums zur Düse 70 alle weiteren Teile, die direkt mit dem Medium in Kontakt stehen, sowie außerdem die Elemente, die erforderlich sind, um die betreffenden, mit dem Medium in Kontakt stehenden Teile zusammen zu montieren bzw. in ihrer Position an der Fluidikeinheit 60 zu halten. Im Übrigen umfasst die Fluidikeinheit 60 auch Mittel, um das Ausstoßelement 80 nach erfolgter Dosierstoffabgabe wieder in eine Ruheposition bzw. Ausgangsposition zu bringen, wie nachfolgend noch erläutert wird.

Da der grundsätzliche Aufbau von Dosiersystemen bekannt ist, werden der besseren Übersichtlichkeit wegen hier überwiegend solche Komponenten gezeigt, die zumindest mittelbar die Erfindung betreffen.

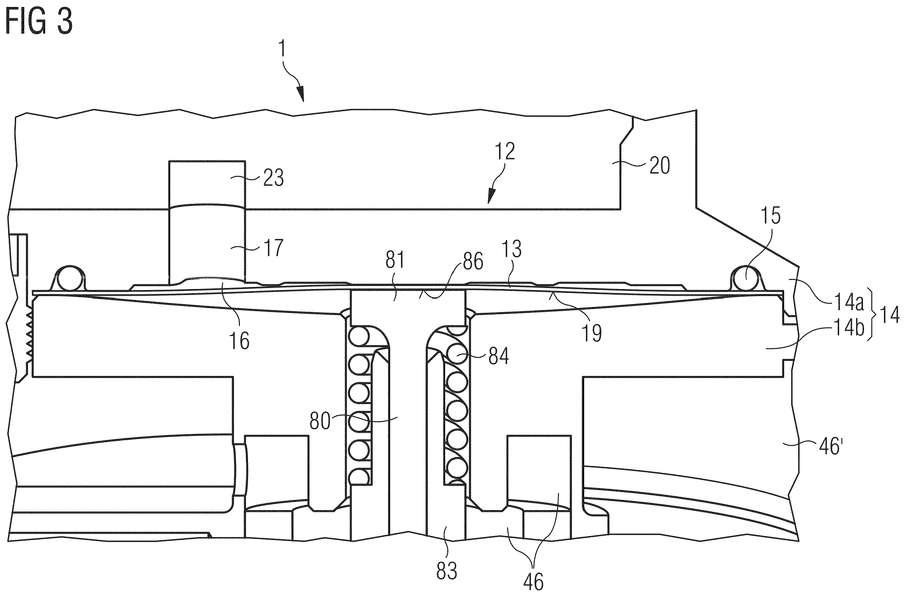

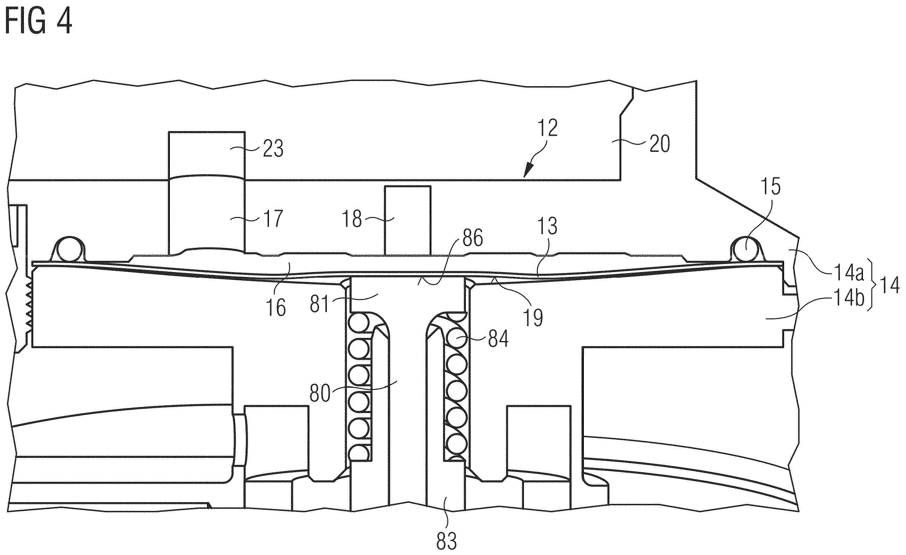

In dem hier gezeigten Ausführungsbeispiel (Figuren 1 und 2) des Dosiersystems 1 umfasst die Aktoreinheit 10 wie erwähnt einen mit Druckmedium, hier bevorzugt Druckluft, beaufschlagbaren Pneumatik-Aktor 12. Es sei darauf hingewiesen, dass in den Figuren 1 und 2 der Pneumatik 12 sowie die Kopplung an das Ausstoßelement nur schematisch gezeigt ist. Insbesondere ist eine Membran 13 des Aktors 12 nur schematisch gezeigt, also nicht in einer realen Position bzw. Ausgestaltung, die die Membran 13 im Betrieb bei einer Auslenkung bzw. einem Rückzug tatsächlich hat. Dies wird später anhand der Figuren 3 und 4 erläutert.

Der Pneumatik-Aktor 12 (Figur 1) ist so mit der Fluidikeinheit 60 gekoppelt, dass mittels einer Ansteuerung des Pneumatik-Aktors 12 der Stößel 80 so betätigt wird, dass von der Fluidikeinheit 60 ein zu dosierendes Medium in der gewünschten Menge zum gewünschten Zeitpunkt ausgestoßen wird. Im hier dargestellten Fall verschließt der Stößel 80 aktuell eine Düsenöffnung 72 und dient somit auch als Verschlusselement 80. Da aber der größte Teil des Mediums bereits aus der Düsenöffnung 72 ausgestoßen wird, wenn der Stößel 80 in einer Ausstoßrichtung RA (siehe Figur 2) bewegt wird, wird er hier als Ausstoßelement 80 bezeichnet. Die Kopplung zwischen Pneumatik-Aktor 12 und Stößel 80 wird später anhand Figur 3 im Detail erläutert.

Der Pneumatik-Aktor 12 ist in der Aktoreinheit 10 in unmittelbarer Nähe zu einem Steuerventil 20 zur Steuerung des Aktors 12 angeordnet. Das Steuerventil 20, z. B. ein pneumatisches 3/2-Wege-Ventil, ist ausgebildet, um dem Aktor 12 ein Druckmedium, z. B. komprimierte Raumluft, zuzuführen und/oder ein Druckmedium aus dem Aktor 12 abzuführen. Dazu ist der Aktor 12 so in der Aktoreinheit 10 angeordnet, dass eine Bohrung 17 des Aktors 12 mit einem Arbeitsanschluss 23 des Steuerventils 20 zusammenwirkt bzw. mit diesem räumlich verbunden ist. Dies wird besonders in Figur 2 deutlich.

Das Steuerventil 20 umfasst weiterhin einen Druckluftanschluss 22 sowie einen Entlüftungsanschluss 24, wobei je nach Ansteuerung bzw. Schaltstellung des Steuerventils 20 entweder der Druckluftanschluss 22 oder der Entlüftungsanschluss 24 mit dem Arbeitsanschluss 23 zusammenwirkt bzw. verbunden ist. Das Steuerventil 20 ist mittels eines Anschlusskabels 21 mit einer Platine 42 des Dosiersystems gekoppelt und kann darüber von einer Steuereinheit des Dosiersystems 1 (z. B. elektrisch) angesteuert werden (siehe Figur 1).

In Figur 2 ist erkennbar, dass das Steuerventil 20 so in der Aktoreinheit 10 angeordnet ist, dass der Druckluftanschluss 22 mit einer Bohrung 25 (hier links oben) zusammenwirkt bzw. verbunden ist, wobei die Bohrung 25 und der Druckluftanschluss 22 im Wesentlichen den gleichen Durchmesser haben. Die Bohrung 25 ist hier als Abführöffnung 25 eines internen Druck-Reservoirs 32 (im Folgenden auch als Druck-Tank 32 bezeichnet) des Dosiersystems 1 realisiert. Durch diese Bohrung 25 kann dem Steuerventil 20 (über den Druckluftanschluss 22) und damit in weiterer Folge auch dem Aktor 12 (über den Arbeitsanschluss 23 und die Bohrung 17) ein Druckmedium zugeführt werden.

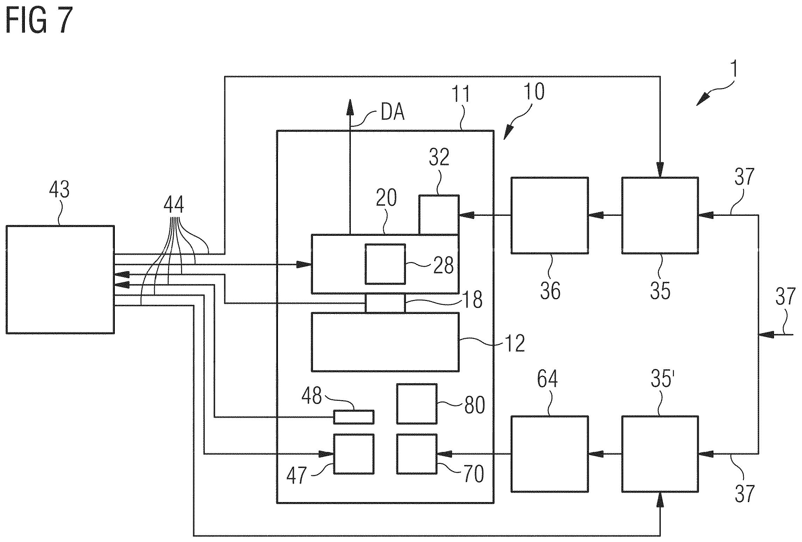

Der Druck-Tank 32 grenzt hier unmittelbar an das Steuerventil 20 an. Daher sind zwischen dem Druck-Tank 32 und dem Steuerventil 20, abgesehen von der Bohrung 25, keine Verbindungsleitungen nötig, so dass Leitungsverluste im Druckmedium weitestgehend verhindert werden können. Der Druck-Tank 32 erstreckt sich im Gehäuseblock 11a zwischen der Abführöffnung 25 und einer Druckmedium-Zuführeinrichtung 30, welche eine Koppelstelle 31 für eine externe Druckmedium-Zuführung (nicht gezeigt) umfasst (siehe Figur 1) und stellt einen Hohlraum bzw. eine Kammer im Dosiersystem 1 dar. Mittels der Druckmedium-Zuführeinrichtung 30 kann dem Druck-Reservoir 32 ein Druckmedium mit einem bestimmten Druck in einer Richtung RD zugeführt werden. Anders als hier gezeigt, kann eine externe Druckmedium-Zuleitung zusätzlich auch einen ansteuerbaren Druckregler umfassen, wie noch anhand Figur 7 erläutert wird.

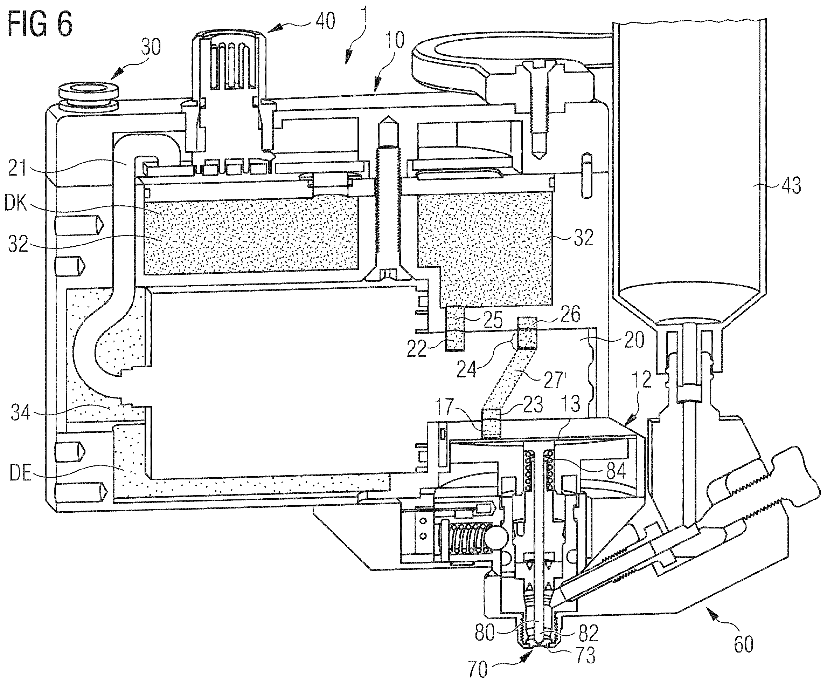

Der Druck-Tank 32 ist dazu ausgebildet, insbesondere in einem Zusammenspiel mit der Druckmedium-Zuführeinrichtung 30 und dem Druckregler, im Betrieb ein Druckmedium DK mit einem bestimmten Druck vorzuhalten (siehe Figur 6). Der Druck des Druckmediums im Druck-Tank 32 entspricht dem Versorgungsdruck des Aktors 12.

Der Druck-Tank 32 umfasst hier einen Drucksensor 33, um einen Druck des Druckmediums im Druck-Tank 32 zu bestimmen (siehe Figur 1). Der Drucksensor 33 ist hier auf einer Platine 42 des Dosiersystems 1 angeordnet. Die Leiterplatte 42 kann noch verschiedene andere elektronische Bauteile umfassen bzw. damit gekoppelt sein, z. B. einen Temperatursensor 48 oder eine Heizeinrichtung 47 bzw. ein Heizelement 47. Die Platine 42 ist mit einer Anschlusseinrichtung 40 verbunden, welche eine Koppelstelle 41 für ein Anschlusskabel der Steuereinheit (nicht gezeigt) umfasst. Mittels der Koppelstelle 41, z. B. einer Steckerbuchse, können einerseits die Messsignale des Drucksensors 33 bzw. weiterer Sensoren der Steuereinheit des Dosiersystems 1 zugeführt werden. Andererseits kann die Steuereinheit mittels der Anschlusseinrichtung 40 auf die verschiedenen elektrischen Komponenten des Dosiersystems 1 zugreifen, also z. B. die Heizeinrichtung 47 ansteuern. Weiterhin kann die Steuereinheit mittels der Anschlusseinrichtung 40, der Platine 42 und der Anschlusskabel 21 auch das Steuerventil 20 ansteuern.

Aus Figur 1 geht weiterhin hervor, dass das Steuerventil 20 einen Entlüftungsanschluss 24 umfasst, der mit einer Bohrung 26 (hier rechts oben) eines Entlüftungsbereichs 34 des Dosiersystems 1 zusammenwirkt bzw. verbunden ist, wobei die Bohrung 26 und der Entlüftungsanschluss 24 im Wesentlichen den gleichen Durchmesser haben. Mittels des Entlüftungsanschlusses 24 und der Bohrung 26 kann ein Druckmedium aus dem Aktor 12 abgeführt werden und vorteilhafterweise noch zur Kühlung des Steuerventils 20 genutzt werden. Der Entlüftungsbereich 34 wird später anhand von Figur 6 näher erläutert.

Um den Pneumatik-Aktor 12 in gewünschter Weise zu betreiben, kann das Steuerventil 20 von der Steuereinheit des Dosiersystems 1 angesteuert werden. Das in Figur 1 gezeigte Steuerventil (im Folgenden auch "Pneumatikventil" genannt) 20 könnte z. B. ein pneumatisches 3/2-Wege-Magnetventil mit einer Normalstellung offen sein (Stellung "Befüllen"). Entsprechend kann in einer Normalstellung des Pneumatikventils 20 das Druckmedium vom Druck-Reservoir 32 über den Druckluftanschluss 22 und einen im Pneumatikventil 20 befindlichen Strömungskanal 27 (hier strichliert dargestellt) zum Arbeitsanschluss 23 geleitet werden. Das Druckmedium strömt bei dieser ersten Schaltstellung des Steuerventils 20 mit dem im Druck-Reservoir 32 vorherrschenden Druck (Versorgungsdruck) in einen Aktorraum des Aktors 12 ein, um eine Membran des Aktors 12 und damit den Stößel 80 nach unten in einer Ausstoßrichtung des Stößels 80 auszulenken, wobei ein Tropfen des Dosierstoffs aus der Düse 70 ausgestoßen wird.

Das bedeutet, in einer Normalstellung (ersten Schaltstellung) des Pneumatikventils 20 steht der Aktor 12 unter einem bestimmten Druck, wobei eine Stößelspitze 82 des Stößels 80 einem Dichtsitz 73 der Düse 70 anliegt, d. h. die Düse 70 bzw. das Dosiersystem 1 ist geschlossen (siehe dazu Figur 2). Es kann aber anders als hier gezeigt auch sein, dass die Stößelspitze 82 in Normalstellung des Magnetventils 20, also bei einer maximalen Auslenkung der Membran, nicht vollständig in die Düse 70 einschlägt, wobei die Ausstoßbewegung des Stößels 80 bereits vorher, also von der Düse 70 beabstandet, gestoppt wird.

In dem in Figur 2 gezeigten Fall wird der Aktor 12 mit dem Druck befüllt, der direkt vor dem Steuerventil 20 anliegt, d. h. der Versorgungsdruck des Aktors 12 entspricht auch dem Aktor-Fülldruck. Es ist aber grundsätzlich auch möglich, den Aktor 12 mit einem geringeren Druck als dem Versorgungsdruck zu füllen und/oder den Aktor 12 mit einem dynamischen Druckverlauf zu füllen. Damit lässt sich z. B. ein bestimmtes Geschwindigkeitsprofil bei der Ausstoßbewegung des Stößels 80 realisieren. Um dies zu erreichen, könnte das Dosiersystem 1, z. B. das Magnetventil 20, um ein oder mehrere ansteuerbare Stellglieder mit variablem Durchsatz ergänzt werden, z. B. piezobetriebene Stellglieder. Ein solches Stellglied könnte z. B. im Bereich des Arbeitsanschlusses 23 angeordnet sein (nicht gezeigt).

Um den Aktor 12 nach erfolgter Dosierstoffabgabe wieder in eine Ruheposition zu bringen, kann das Pneumatikventil 20 von der Steuereinheit so geschaltet werden, dass der Arbeitsanschluss 23 mittels eines innenliegenden Strömungskanals 27' (siehe Figur 6) des Magnetventils 20 mit dem Entlüftungsanschluss 24 verbunden wird (zweite Schaltstellung). Das Druckmedium strömt dann in den Entlüftungsbereich der Aktoreinheit 10. Dies wird später anhand von Figur 6 erläutert.

Die Ruheposition des Aktors 12 liegt wie gesagt dann vor, wenn sowohl die Membran 13 als auch das Ausstoßelement 80 in einer Ruheposition sind. Die Membran 13 des Aktors 12, die ja aktuell nicht mit Druckmedium beaufschlagt wird, kehrt aufgrund ihrer Eigenspannung wieder in ihre Ruheposition zurück. Um auch den Stößel 80 wieder in eine Ruheposition zu bringen, so dass die Düsenöffnung 70 freigegeben wird, wird ein Stößelkopf 81 des Stößels 80 mittels einer Rückstellfeder 84 nach oben in Richtung des Steuerventils 20 gedrückt. Die genaue Funktionsweise des Aktors 12 wird später anhand der Figuren 3 und 4 detailliert erläutert.

Aus Figur 2 wird besonders deutlich, dass die Fluidikeinheit 60 des Dosiersystems 1 einen zweiten Gehäuseteil 11b umfasst und hier zur Bildung des Gehäuses 11 wie erwähnt mittels einer Schnellkupplung mit der Aktoreinheit 10 bzw. deren Gehäuseteil 11a verbunden ist. Die Fluidikeinheit 60 umfasst den Stößel 80, welcher mit einer Anlagefläche 86 des Stößelkopfs 81 einer in Richtung des Stößels 80 weisenden Seitenfläche (Unterseite) der Membran 13 des Aktors 12 direkt anliegt. Der Stößel 80 ist hier, wie es auch allgemein bei dem Dosiersystem bevorzugt ist, einteilig, d.h. aus einem Stück ausgebildet. Zur Kopplung an die Aktoreinheit 10 (nur teilweise gezeigt) wird der Stößel 80, insbesondere der Stößelkopf 81, mittels einer Feder 84 in axialer Richtung nach oben gegen die Membran 13 gedrückt. Die Rückstellfeder 84 liegt einem Stößellager 83 auf, an welches sich nach unten eine Stößeldichtung 85 anschließt. In dem hier (Figur 2) gezeigten Fall ist die Membran 13 (schematisch gezeigt) des Aktors 12 mit Druckmedium beaufschlagt (Betriebsstellung des Aktors 12), so dass die Stößelspitze 82 dem Dichtsitz 73 der Düse 70 anliegt.

Sofern sich der Aktor 12 anders als hier gezeigt in einer Ruheposition befindet, d. h. die Membran 13 des Aktors 12 ist nicht mit Druckmedium beaufschlagt bzw. nicht ausgelenkt, wird die Stößelspitze 82 mittels der Rückstellfeder 84 vom Dichtsitz 73 der Düse 70 wegdrückt. Die Stößelspitze 82 befindet sich dann in einem Abstand vom Dichtsitz 73 der Düse 70 entfernt, so dass die Düsenöffnung 72 frei bzw. unverschlossen ist.

Die Zuführung von Dosierstoff zur Düse 70 erfolgt über eine Düsenkammer 71, zu der ein Zuführkanal 62 führt (siehe Figur 2). Der Zuführkanal 62 ist hier eingebettet in einen Fluidikkörper 61. Der Zuführkanal 62 ist andererseits mit einer Dosierstoff-Kartusche 64 verbunden. Der Zuführkanal 62 ist nach außen hin mit einer Klemmschraube 65 verschlossen. Die Dosierstoff-Kartusche 64 ist im Bereich einer Koppelstelle 63 reversibel am Gehäuse 11 befestigt. Weiterhin ist die Kartusche 64 hier mittels eines Halteelements 45 an der Aktoreinheit 10 befestigt (siehe Figur 1).

Um den Dosierstoff im Bereich der Düse 70 auf eine bestimmte Verarbeitungstemperatur zu erwärmen, umfasst das Dosiersystem 1 zumindest eine Heizeinrichtung 47, z. B. eine oder mehrere Heizplatinen 47 oder Heizfolien 47. Die wird besonders in der vergrößerten Ansicht in Figur 2 deutlich. Die Heizeinrichtung 47 ist mittels der Steuereinheit ansteuerbar. Die Heizeinrichtung 47 ist hier in die Aktoreinheit 10 integriert und beheizt zunächst den Kupplungsteil der Aktoreinheit 10, also z. B. die Kupplungsmechanik 50. Sobald der Stecckupplungsteil 53 der Fluidikeinheit 60 in den Kupplungsteil der Aktoreinheit 10 eingesetzt ist, wird der Steckkupplungsteil 53, insbesondere der Dosierstoff in der Düse 70, auf eine bestimmte Temperatur erwärmt. Der Steckkupplungsteil 53 ist so gestaltet, dass eine möglichst gute Wärmeleitung in Richtung der Düse 70 gegeben ist. Die Fluidikeinheit 60 umfasst hier keine separate Heizeinrichtung und kann daher auch im Betrieb problemlos angefasst bzw. demontiert werden.

Um den Pneumatik-Aktor 12 und insbesondere das Steuerventil 20 vor einer Überhitzung zu schützen, ist im Dosiersystem 1 eine weitgehende thermische Entkopplung der Heizeinrichtung 47 vom Pneumatik-Aktor 12 vorgesehen. Bei bestimmungsgemäßer Montage des Dosiersystems, also wenn die Fluidikeinheit 60 und die Aktoreinheit 10 wie in Figur 2 gezeigt miteinander verkoppelt sind, umfasst das Dosiersystem 1 mehrere gasgefüllte Hohlräume 46, 46'. Die Hohlräume 46, 46' dienen der thermischen Entkopplung des Pneumatik-Aktors 12 von der Fluidikeinheit 60. Mittels dieser Hohlräume 46, 46' kann eine Wärmeleitung von der Heizeinrichtung 47 in Richtung der Aktoreinheit 10 bzw. des Steuerventils 20 effektiv unterbunden werden.

Figur 3 zeigt einen weiter vergrößerten Teil des Dosiersystems 1 gemäß der Figuren 1 und 2. Allerdings ist das Dosiersystem 1 hier in einer anderen Phase des Dosiervorgangs dargestellt. Wie zuvor erläutert, zeigen die Figuren 1 und 2 das Dosiersystem 1 während eines Ausstoßprozesses von Dosierstoff aus der Düse. Die Düse 70 des Dosiersystems ist dabei (Figuren 1 und 2) durch den Stößel 80 verschlossen. Demgegenüber zeigt Figur 3 einen Pneumatik-Aktor 12 in einer Ruheposition, d. h. die Membran 13 des Aktors 12 ist nicht ausgelenkt, wobei sich auch das Ausstoßelement 80 in einer Ruheposition befindet. Bei dem Pneumatik-Aktor 12 gemäß Figur 3 ist die Düse 70 also nicht durch das Ausstoßelement 80 verschlossen.

Der Pneumatik-Aktor 12 aus Figur 3 steht mittels der Bohrung 17 in direktem Wirkkontakt mit dem Arbeitsanschluss 23 des Pneumatikventils 20. Der Aktor 12 umfasst wie erwähnt einen starren Aktor-Grundkörper 14, der hier mittels zwei Komponenten 14a, 14b ausgebildet ist. Die beiden Komponenten 14a, 14b sind zueinander, vorzugsweise ortsfest, so angeordnet, dass sie im Querschnitt einen Hohlraum zwischen sich ausbilden. Hingegen liegen die beiden Aktor-Grundkörperteile 14a, 14b in einem äußeren Bereich der jeweiligen Komponente 14a, 14b einander direkt auf und werden dort lösbar aufeinander gedrückt, so dass die Membran 13 gegebenenfalls ausgetauscht werden kann.

Zur Ausbildung eines Aktorraums 16 des Aktors 12 ist wie erwähnt eine (Betätigungs-)Membran 13 zwischen den beiden starren Grundkörperteilen 14a, 14b abgedichtet angeordnet. Es wird hier deutlich, dass der Aktor 12 zur Bewegung des Stößels 80 nur eine einzige Membran 13 umfasst. Die Membran 13 ist hier in einer Ruheposition dargestellt und ist in einem mittleren Bereich, dort wo das Ausstoßelement 80 der Membran 13 anliegt, nach oben gewölbt. Die Feder 84 bzw. das Ausstoßelement 80 drücken die Membran 13 hier gegen den oberen Aktor-Grundkörper 14a, dem die Membran 13 zumindest bereichsweise anliegt. Der Aktor-Grundkörper 14a begrenzt hier also den Hub bzw. die Auslenkung der Membran 13 nach oben hin. Es ist allerdings auch denkbar, dass der Aktor 12 so ausgebildet ist, dass die Membran auch in einer überwiegend horizontalen Ruheposition dem oberen Aktor-Grundkörper 14a zumindest bereichsweise anliegt, z. B. indem der Aktor-Grundkörper 14a im Bereich des Stößelkopfs 81 einen in Richtung der Membran 13 weisenden Fortsatz bzw. eine Auswölbung aufweist (nicht gezeigt).

Auch wenn dies aus der Schnittdarstellung gemäß Figur 3 nicht hervorgeht, so hat die Membran 13 vorzugsweise eine kreisrunde Grundfläche und ist mit ihrem Randbereich vollständig umlaufend mit den beiden Grundkörperteilen 14a, 14b des starren Grundkörpers 14 gasdicht gekoppelt. Dazu wird die Membran 13 im Randbereich von unten mittels der unteren Grundkörper-Komponente 14b gegen die obere Grundkörper-Komponente 14a gepresst. Zur Abdichtung ist zwischen der Membran 13 und der oberen Komponenten 14a ein Dichtungsring 15 angeordnet, z. B. ein O-Ring 15.

Der Aktorraum 16 des Aktors 12 ist hier wie erwähnt zwischen einer vom Ausstoßelement 80 weg weisenden Seitenfläche (Oberseite) der Membran 13 und dem hier oberen starren Aktor-Grundkörperteil 14a ausgebildet. Der Aktorraum 16 kann mittels der Bohrung 17 mit einem Druckmedium gefüllt werden, um die Membran 13 aus der hier gezeigten Ruheposition nach unten auszulenken. Dies wird später anhand Figur 4 noch einmal schematisch gezeigt.

Zur Kopplung des Ausstoßelements 80 an die Aktoreinheit wird hier der Stößelkopf 81 mittels einer Feder 84 an die Unterseite 19 der Membran 13 gepresst. Die Rückstellfeder 84 ist so ausgebildet, dass sie eine solche (Feder-)Kraft auf den Stößel 80 ausübt, dass dieser auch in einer Ruheposition des Aktors 12 in direktem Wirkkontakt mit der Unterseite 19 gehalten wird. In dem hier gezeigten Fall drückt der Stößel 80 die Membran 13 (zumindest einen mittleren Bereich der Membran 13) über eine horizontale Ruheposition hinaus nach oben, wobei die Auslenkung durch die Komponente 14a begrenzt wird.

Figur 4 zeigt einen Ausschnitt eines im Schnitt dargestellten Dosiersystems gemäß einer weiteren Ausführungsform. Der Unterschied zu den bisher gezeigten Dosiersystemen (Figuren 1 bis 3) ist, dass der Pneumatik-Aktor 12 hier zusätzlich einen Sensor 18 zur Bestimmung einer Geschwindigkeit einer Bewegung des Ausstoßelements 80 umfasst.

Der Sensor 18 ist hier im oberen Aktor-Grundkörperteil 14a so angeordnet, dass er sich auf einer gedachten vertikalen Linie (entsprechend einer Längserstreckung des Stößels 80) mit dem Stößel 80 befindet. Der Sensor 18 und der Stößelkopf 81 liegen einander auf jeweils unterschiedlichen Seiten der Membran 13 direkt gegenüber. Um die Geschwindigkeit des Stößels 80 während jeder Phase der Ausstoßbewegung und/oder der Rückzugsbewegung zu bestimmen, kann der Sensor 18 einen Positionssensor 18 umfassen, um eine Entfernung zwischen dem Sensor 18 und dem Stößelkopf 81 in Abhängigkeit der Zeit erfassen. Beispielsweise kann der Sensor 18 ein Hall-Sensor sein, wobei der Stößelkopf 81 einen Magneten (nicht gezeigt) umfassen würde. Zur Weitergabe der Messdaten ist der Sensor 18 mit der Steuereinheit des Dosiersystems 1 gekoppelt (hier nicht gezeigt).

In der Detailansicht von Figur 4 wird weiterhin deutlich, dass die Membran 13 zur Dosierstoffabgabe verformt wird. Wie in den Figuren 1 und 2, ist der Aktor 12 auch hier in einer Betriebsstellung gezeigt. Das bedeutet, die Oberseite der Membran 13 wird aktuell mit Druckmedium beaufschlagt. Wie hier zu sehen ist, wird die Membran 13 auf Grund der Beaufschlagung nicht gleichmäßig bzw. einheitlich nach unten in Richtung des Stößels 80 ausgelenkt. Vielmehr gibt es Bereiche der Membran 13, die stärker nach unten bewegt werden und andere Bereiche, die kaum eine Positionsänderung erfahren.

Konstruktionsbedingt werden die Randbereiche der Membran 13, dort wo die Membran 13 mit dem Aktor-Grundkörper 14 gekoppelt ist, kaum ausgelenkt. Darüber hinaus wird auch der Bereich der Membran 13, der dem Stößelkopf 81 aufliegt, vergleichsweise wenig ausgelenkt. Das liegt daran, dass der Stößel 80 mittels der Feder 84 gegen die Unterseite 19 der Membran 13 gedrückt wird. Die Feder 84 setzt der Auslenkung der Membran 13 also eine gewisse Kraft entgegen. Allerdings ist die Feder 84 so ausgestaltet, dass die Membran 13 eine Federkraft der Feder 84 während der Auslenkung überwindet und den Stößel 80 zur Dosierstoffabgabe um einen gewünschten Betrag in Richtung der Düse auslenkt.

Demgegenüber erfahren die mittigen Bereiche der Membran 13, die im dargestellten Querschnitt zwischen dem Stößelkopf 81 und dem Randbereich der Membran 13 liegen, eine relativ starke Auslenkung nach unten. Die Membran 13 wird bei der Auslenkung also quasi "wellenförmig" verformt.

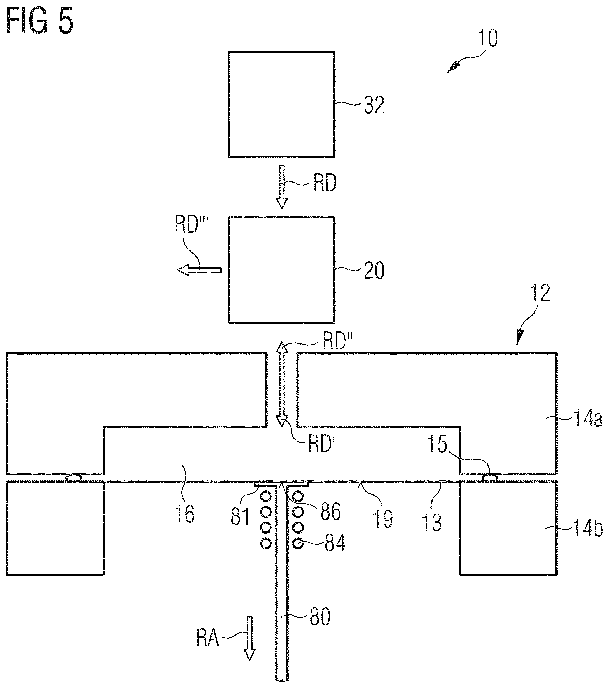

Figur 5 zeigt noch einmal grob schematisch den Aufbau und die Ansteuerung der Aktoreinheit gemäß einer Ausführungsform der Erfindung. Die Aktoreinheit 10 umfasst ein internes Druck-Reservoir 32, das Druckmedium mit einem bestimmten Versorgungsdrucks vorhält. Das Druckmedium wird in einer Strömungsrichtung RD einem Steuerventil 20 zugeführt. Das Steuerventil 20 wird mittels einer Steuereinheit (nicht gezeigt) so angesteuert, dass das Druckmedium in einer Richtung RD' in einen Aktorraum 16 eines Pneumatik-Aktors 12 einströmt. Je nach Ausgestaltung der Aktoreinheit 10 kann eine optionale Drosseleinrichtung (nicht gezeigt) so gesteuert werden, dass der Aktorraum 16 mit einem Versorgungsdruck oder einem davon abweichenden Aktor-Fülldruck mit Druckmedium gefüllt wird.

Auf Grund der Beaufschlagung mit Druckmedium wird die Membran 13 und damit auch das Ausstoßelement 80 zur Dosierstoffabgabe nach unten in einer Richtung RA ausgelenkt.

In einem nächsten Schritt wird das Steuerventil 20 von der Steuereinheit so angesteuert, dass der Aktorraum 16 unmittelbar nach erfolgter Dosierstoffabgabe entlüftet wird. Das Druckmedium verlässt den Aktorraum 16 in einer Strömungsrichtung RD" und strömt in das Steuerventil 20 ein, bevor es dieses in einer Richtung RD‴ verlässt. Auf Grund des Druckabbaus im Aktorraum 16 schwingt die Membran 13 in ihre Ruheposition zurück. Das Ausstoßelement 80 folgt der Bewegung der Membran 13 unverzüglich bzw. simultan nach - gegebenenfalls unterstützt das Ausstoßelement 80 die Bewegung der Membran 13 sogar - und wird mittels einer Feder 84 wieder in eine Ruheposition bewegt. Damit ist ein Zyklus der Dosierstoffabgabe durchlaufen.

Figur 6 zeigt das Dosiersystem aus den Figuren 1 bis 3 während einer Entlüftung des Pneumatik-Aktors. Das Steuerventil 20 wird hier von der Steuereinheit (nicht gezeigt) so angesteuert, dass der Arbeitsanschluss 23 mit dem Entlüftungsanschluss 24 zusammenwirkt. Hierzu wird das Steuerventil 20 in eine zweite Schaltstellung verbracht, so dass im Inneren des Steuerventils 20 ein Strömungskanal 27' (hier strichliert gezeigt) die beiden Anschlüsse 23, 24 verbindet. Das Druckmedium strömt über die Bohrung 17 aus dem Aktor 12 aus und wird durch den Strömungskanal 27' zum Entlüftungsanschluss 24 und schließlich in den Entlüftungsbereich 34 geleitet. Der Stößel 80 wird mittels der Feder 84 von der Düse 70 weg nach oben in Richtung der Aktoreinheit 10 gedrückt, so dass sich ein kleiner Spalt zwischen der Stößelspitze 82 und dem Dichtsitz 72 bildet (nicht gezeigt). Die Membran 13 ist hier in einer horizontalen "Zwischenstellung" gezeigt, d. h. die Membran kehrt in Folge der Entlüftung des Aktorraums aktuell wieder in eine Ruheposition zurück.

Der Entlüftungsbereich 34 stellt einen Hohlraum bzw. eine Kammer innerhalb des Gehäuses der Aktoreinheit 10 dar. In dieser Darstellung ist die Kammer des Entlüftungsbereichs 34 durch das einströmende Druckmedium DE verdeckt. Das Druckmedium weist im Entlüftungsbereich 34 einen geringen Druck als den Aktor-Versorgungsdruck auf und wird daher als expandiertes Druckmedium DE bezeichnet. Der Entlüftungsbereich 34 grenzt einerseits mittels der Bohrung 26 direkt an das Steuerventil 20 an und weist andererseits eine Bohrung nach außerhalb des Dosiersystems auf (nicht gezeigt). Wie hier gezeigt, umschließt der Entlüftungsbereich 34 einen wesentlichen Anteil des Steuerventils 20 von außen.

Der Entlüftungsbereich 34 ist räumlich und steuerungstechnisch insbesondere vom Druck-Tank 32 der Aktoreinheit 10 getrennt. Der Druck-Tank 32 ist hier mit einem komprimierten Druckmedium DK gefüllt, wobei eine den Druck-Tank 32 ausbildende Kammer von dem Druckmedium DK verdeckt ist.

Das in den Entlüftungsbereich 34 einströmende Druckmedium kann so am Steuerventil vorbeigeführt werden, z. B. mittels strömungsleitender Elemente, um möglichst viel Wärme von einer Oberfläche des Steuerventils 20 abzuführen. Das Druckmedium, z. B. komprimierte Raumluft, wird infolge der Passage des Aktors 12 kaum erwärmt und kann daher als Kühlmedium eingesetzt werden. Auf Grund des vergleichsweise großen Volumens des Entlüftungsbereichs 34, insbesondere gegenüber dem Aktorraum, kann der Druck des Druckmediums im Entlüftungsbereich 34 deutlich geringer sein als z. B. im Druck-Reservoir 32 und/oder im Aktorraum.

Figur 7 zeigt eine schematische Darstellung eines Steuerverfahrens für ein Dosiersystem 1 gemäß einer Ausführungsform der Erfindung. Das Dosiersystem 1 umfasst hier ein Gehäuse 11, in dem die wesentlichen Komponenten der Aktoreinheit 10 und der Fluidikeinheit eingefasst sind. Das Dosiersystem 1 umfasst weiterhin eine Steuereinheit 43 mit einer Anzahl von Anschlusskabeln 44, um die jeweiligen Komponenten des Dosiersystems 1 separat anzusteuern.

Die Steuereinheit 43 ist einerseits mit einem Druckregler 35 gekoppelt, um den Druck des in den internen Druck-Tank 32 einströmenden Druckmediums zu steuern und/oder zu regeln. Der Druckregler 35 ist mit einer Druckmedium-Zuführung 37 gekoppelt und ist hier als Komponente der Aktoreinheit 10 z. B. außen am Gehäuse 11 des Dosiersystems 1 angeordnet. Zwischen dem Druckregler 35 und dem internen Druck-Tank 32 ist hier optional noch ein externes Druck-Reservoir 36 angeordnet. Der Druckregler 35 kann von der Steuereinheit 43, vorzugsweise in Abhängigkeit von Eingangsparametern, z. B. einer Stößelgeschwindigkeit, so gesteuert werden, dass im externen Druck-Tank 36 bzw. im internen Druck-Tank 32 ein bestimmter Druck vorliegt, um eine konstante Stößelgeschwindigkeit beim Ausstoßprozess zu erreichen.

Zur Ansteuerung des Aktors 12 kann die Steuereinheit 43 andererseits das Steuerventil 20 ansteuern, um den Aktorraum des Aktors 12 zu befüllen (mittels des Druckmediums aus dem internen Druck-Tank 32) bzw. zu entlüften (mittels eines Druckmedium-Auslasses DA). Der Aktor 12 des Dosiersystems 1 ist mit einem Sensor 18, z. B. einem Positionssensor 18, gekoppelt, wobei die Messdaten als Eingangsparameter an die Steuereinheit 43 übermittelt werden.

Die Steuereinheit 43 kann diese und weitere Eingangsparameter, z. B. von einem Drucksensor im internen Druck-Tank 32, verarbeiten und zur Steuerung und/oder Regelung der Stößelgeschwindigkeit bzw. des Verlaufs der Stößelgeschwindigkeit ("Flankensteuerung") nutzen. In Abhängigkeit der Messwerte kann die Steuereinheit 43 z. B. den Druckregler 35 so ansteuern, dass ein bestimmter Solldruck des Druckmediums (Versorgungsdruck) im internen Druck-Tank 32 vorliegt, um eine konstante Stößelgeschwindigkeit zu erreichen.

Alternativ oder zusätzlich kann die Steuereinheit 43 eine Drosseleinrichtung 28 zur Regulierung des Durchflusses des Druckmediums z. B. mit einem piezoelektrischen Stellglied 28, hier im Bereich des Steuerventils 20, in Abhängigkeit von Eingangsparametern ansteuern, um eine bestimmte Stößelgeschwindigkeit bzw. einen gewünschten Geschwindigkeitsverlauf bei der Ausstoßbewegung und/oder Rückzugsbewegung des Stößels 80 zu erreichen.

Die Steuereinheit 43 kann weiterhin eine Heizeinrichtung 47 des Dosiersystems 1 steuern, um den Dosierstoff in der Düse 70 auf eine Solltemperatur zu erwärmen. Vorzugsweise kann die Steuereinheit 43 die Heizeinrichtung 47 in Abhängigkeit eines Temperatur-Messwerts steuern und/oder regeln, wobei der Temperatur-Messwert mittels eines Temperatursensors 48 bestimmt wird.

Die Steuereinheit 43 kann auch auf einen zweiten Druckregler 35' zugreifen, welcher den Druck des Druckmediums in der Dosierstoff-Kartusche 64 (Kartuschen-Druck) steuert.

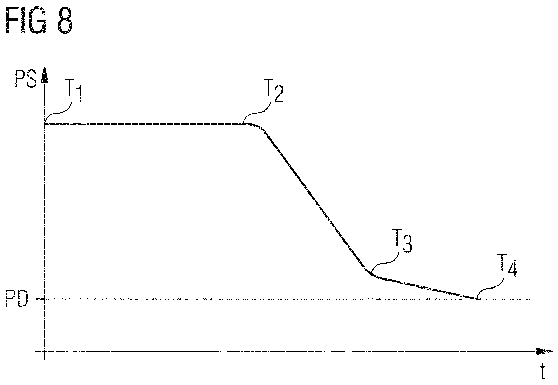

Figur 8 zeigt schematisch eine Darstellung eines Geschwindigkeitsverlaufs einer möglichen Stößelbewegung gemäß einer Ausführungsform der Erfindung. Die Steuerung des Geschwindigkeitsverlaufs wird auch als Flankensteuerung bezeichnet. Dargestellt ist eine relative Position PS der Stößelspitze in Relation zur einer relativen Zeit t des Ausstoßprozesses. Die Position PD des Dichtsitzes der Düse im Dosiersystem ist hier strichliert gezeigt.

Vor Beginn des Ausstoßprozesses, zum Zeitpunkt T₁, befindet sich der Stößel in einer Ruheposition. Das bedeutet, die Spitze des Stößels weist einen größtmöglichen Abstand zur Düse auf, so dass die Düse des Dosiersystems unverschlossen ist.

Zu einem Zeitpunkt T₂ wird der Aktor mit einem hohen Druck mit Druckmedium befüllt, was zu einer hohen Ausstoßgeschwindigkeit des Stößels führt. Dazu könnte beispielsweise ein piezoelektrisches Stellglied vollständig geöffnet sein, um einen größtmöglichen Luftdurchfluss zu ermöglichen.

Zu einem Zeitpunkt T₃, z. B. kurz vor dem Auftreffen der Stößelspitze in den Dichtsitz der Düse, wird die Ausstoßgeschwindigkeit des Stößels verlangsamt. Beispielsweise indem der Luftdurchfluss durch das pneumatische Stellglied reduziert wird. Somit erfolgt das Auftreffen der Stößelspitze in den Dichtsitz der Düse zum Zeitpunkt T₄ mit einer geringeren Geschwindigkeit, was die Dosiergenauigkeit bei bestimmten Dosierstoffen verbessern kann.

Lediglich der Vollständigkeit halber sei darauf hingewiesen, dass eine derartige Steuerung der Flanken selbstverständlich auch bei einer Rückzugsbewegung des Stößels möglich ist.

Es wird abschließend noch einmal darauf hingewiesen, dass es sich bei den vorhergehend detailliert beschriebenen Dosiersystemen lediglich um Ausführungsbeispiele handelt, welche vom Fachmann in verschiedenster Weise modifiziert werden können, ohne den Bereich der Erfindung zu verlassen. So kann beispielsweise das Dosiersystem weitere Sensoren zur Bestimmung von relevanten Betriebsparametern umfassen, z. B. einen Sensor zur Bestimmung einer Temperatur des Steuerventils. Weiterhin schließt die Verwendung der unbestimmten Artikel "ein" bzw. "eine" nicht aus, dass die betreffenden Merkmale auch mehrfach vorhanden sein können.

### Bezugszeichenliste

1 Dosiersystem
10 Aktoreinheit
11 Gehäuse
11a, 11b Gehäuseblock / Komponenten des Gehäuses
12 Aktor
13 Membran
14 Aktor-Grundkörper
14a, 14b Komponenten des Aktor-Grundkörpers
15 Aktor-Dichtungsring
16 Aktorraum
17 Bohrung des Aktorraums
18 Sensor
19 Membranunterseite
20 Steuerventil
21 Anschlusskabel des Steuerventils
22 Druckluftanschluss
23 Arbeitsanschluss
24 Entlüftungsanschluss
25 Abführöffnung / Bohrung des Druck-Tanks
26 Bohrung des Entlüftungsbereichs
27, 27' Strömungskanal
28 Drosseleinrichtung
30 Druckmedium-Zuführeinrichtung
31 Koppelstelle 32 Druck-Reservoir
33 Drucksensor
34 Entlüftungsbereich / Kühleinrichtung
35, 35' Druckregler
36 externes Druck-Reservoir
37 Druckmedium-Zuführung
40 Anschluss
41 Koppelstelle für Anschlusskabel
42 Platine
43 Steuereinheit
44 Anschlusskabel der Steuereinheit
45 Halteelement
46, 46' Hohlraum
47 Heizeinrichtung
48 Temperatursensor
50 Kupplungsmechanik
51 Kupplungsfeder
52 Kugel
53 Steckkupplungsteil
54 Kugelkalotte
60 Fluidikeinheit
61 Fluidikkörper
62 Zuführkanal
63 Koppelstelle der Medienkartusche
64 Medienkartusche
65 Klemmschraube
70 Düse
71 Düsenkammer
72 Austrittsöffnung
73 Dichtsitz
80 Ausstoßelement / Stößel
81 Stößelkopf
82 Stößelspitze
83 Stößellager
84 Stößelfeder
85 Stößeldichtung
86 Anlagefläche
DE Druckmedium expandiert
DK Druckmedium komprimiert
DA Druckmedium-Auslass
PD Position des Dichtsitzes
PS Position der Stößelspitze
RA Ausstoßrichtung des Stößels
RD, RD', RD", RD‴ Strömungsrichtung Druckmedium
RM Ausstoßrichtung des Dosierstoffs
t Zeit der Ausstoßbewegung
T₁, T₂, T₃, T₄ Zeitpunkt

## Patentansprüche

1. Dosiersystem (1) zum Dosieren eines Dosierstoffs, welches Dosiersystem (1) ein Gehäuse (11), umfassend eine Düse (70) und einen Zuführkanal (62) für Dosierstoff, und ein in dem Gehäuse (11) beweglich gelagertes Ausstoßelement (80) sowie eine mit dem Ausstoßelement gekoppelte Aktoreinheit (10) aufweist,
**dadurch gekennzeichnet, dass**
- die Aktoreinheit (10) einen Aktor (12) mit einer Membran (13) umfasst, welche mittels eines Druckmediums beaufschlagbar ist, um das Ausstoßelement (80) in einer Ausstoßrichtung (RA) zu bewegen, wobei gasförmige und/oder flüssige Stoffe als Druckmedium verwendet werden, und dass
- das Ausstoßelement (80) separat ausgebildet ist und zur Kopplung an die Aktoreinheit (10) mittels einer auf das Ausstoßelement (80) wirkenden Kraft gegen eine in Richtung des Ausstoßelements (80) weisende Seitenfläche (19) der Membran (13) gedrückt wird.

2. Dosiersystem nach Anspruch 1, wobei das Dosiersystem (1) so ausgebildet ist, dass die zur Kopplung auf das Ausstoßelement (80) wirkende Kraft einer Ausstoßrichtung (RA) des Ausstoßelements (80) entgegengerichtet ist.

3. Dosiersystem nach Anspruch 1 oder 2, wobei das Dosiersystem (1) so ausgebildet ist, dass das Ausstoßelement (80) zur Kopplung an die Aktoreinheit (10) mittels zumindest einer Federanordnung (84) an die Seitenfläche (19) der Membran (13) gedrückt wird.

4. Dosiersystem nach einem der vorstehenden Ansprüche 1 bis 3, wobei die Membran (13) scheibenartig und/oder hohlraumfrei ausgebildet ist.

5. Dosiersystem nach einem der vorstehenden Ansprüche 1 bis 4, wobei das Gehäuse (11) des Dosiersystems (1) ein Reservoir (32) für das Druckmedium umfasst und/oder wobei das Reservoir (32) direkt an ein Steuerventil (20) der Aktoreinheit (10) zur Steuerung des Aktors (12) angrenzt.

6. Dosiersystem nach Anspruch 5, wobei im Reservoir (32) zumindest ein Drucksensor (33) angeordnet ist.

7. Dosiersystem nach Anspruch 5 oder 6, wobei die Aktoreinheit (10) dazu ausgebildet ist, ein aus einem Aktorraum (16) des Aktors (12) ausströmendes Druckmedium als Kühlmedium zur Kühlung des Steuerventils (20) zu verwenden.

8. Dosiersystem nach einem der vorstehenden Ansprüche 1 bis 7, wobei das Dosiersystem (1) zumindest einen Sensor (18) zur Messung einer Geschwindigkeit einer Bewegung des Ausstoßelements (80) umfasst.

9. Dosiersystem nach einem der vorstehenden Ansprüche 1 bis 8, wobei das Dosiersystem (1) zumindest einen Druckregler (35) umfasst, um einen Druck des Druckmediums in Abhängigkeit eines Eingangsparameters zu steuern und/oder zu regeln, vorzugsweise mittels einer Steuer- und/oder Regeleinheit (43) des Dosiersystems (1).

10. Dosiersystem nach einem der vorstehenden Ansprüche 1 bis 9, wobei das Dosiersystem (1), vorzugsweise ein Steuerventil (20) des Dosiersystems (1) zur Steuerung des Aktors (12), zumindest eine Drosseleinrichtung (28) umfasst, die dazu ausgebildet ist, einen Druck im Aktor (12) in Abhängigkeit eines Eingangsparameters zu steuern und/oder zu regeln, vorzugsweise mittels einer Steuer- und/oder Regeleinheit (43) des Dosiersystems (1).

11. Dosiersystem nach einem der vorstehenden Ansprüche 1 bis 10, wobei das Dosiersystem (1), vorzugsweise ein Steuerventil (20) des Dosiersystems (1) zur Steuerung des Aktors (12), zumindest eine Drosseleinrichtung (28) umfasst, die dazu ausgebildet ist, einen Druckverlauf während einer Befüllung des Aktors (12) und/oder während einer Entleerung des Aktors (12) zu steuern und/oder zu regeln.

12. Dosiersystem nach einem der vorstehenden Ansprüche 1 bis 11, wobei das Dosiersystem (1) so ausgebildet ist, dass in einem Bereich zwischen der Membran (13) und einer Stößeldichtung (85) ein Druck vorgehalten wird, der im Wesentlichen einem Kartuschen-druck entspricht und/oder wobei das Dosiersystem (1) so ausgebildet ist, dass in einem Bereich zwischen der Membran (13), vorzugsweise deren Unterseite, und der Stößeldichtung (85) ein Unterdruck, insbesondere ein Vakuum, vorgehalten wird.

13. Verfahren zur Steuerung eines Dosiersystem (1) zum Dosieren eines Dosierstoffs, welches Dosiersystem (1) ein Gehäuse (11), umfassend eine Düse (70) und einen Zuführkanal (62) für Dosierstoff, und ein in dem Gehäuse (11) beweglich gelagertes Ausstoßelement (80) sowie eine mit dem Ausstoßelement (80) gekoppelte Aktoreinheit (10) aufweist,
- wobei eine Membran (13) eines Aktors (12) der Aktoreinheit (10) mit einem Druckmedium beaufschlagt wird, um das Ausstoßelement (80) in einer Ausstoßrichtung (RA) zu bewegen, wobei gasförmige und/oder flüssige Stoffe als Druckmedium verwendet werden und
- wobei das Ausstoßelement (80) zur Kopplung an die Aktoreinheit (10) mittels einer auf das Ausstoßelement (80) wirkenden Kraft gegen eine in Richtung des Ausstoßelements (80) weisende Seitenfläche (19) der Membran (13) gedrückt wird.

14. Verfahren nach Anspruch 13, wobei ein Druck des Druckmediums in Abhängigkeit eines Eingangsparameters so gesteuert und/oder geregelt wird, dass eine Geschwindigkeit des Ausstoßelements (80) bei einer Ausstoßbewegung einem Sollwert entspricht.

15. Verfahren nach Anspruch 13 oder 14, wobei ein Druck eines in den Aktor (12) einströmenden Druckmediums und/oder ein Druck eines aus dem Aktor (12) ausströmenden Druckmediums in Abhängigkeit eines Eingangsparameters so gesteuert und/oder geregelt wird, dass eine Geschwindigkeit des Ausstoßelements (80) bei einer Ausstoßbewegung und/oder einer Rückzugsbewegung einem Sollwert entspricht.

16. Verfahren nach einem der Ansprüche 13 bis 15, wobei ein Druck des Druckmediums so gesteuert und/oder geregelt wird, vorzugsweise eine Drosseleinrichtung (28) des Dosiersystems (1) mittels einer Steuer- und/oder Regeleinheit (43) des Dosiersystems (1) so angesteuert wird, dass eine Geschwindigkeit des Ausstoßelements (80) während einer Ausstoßbewegung und/oder während einer Rückzugsbewegung variiert wird.

## Claims

1. A dosing system (1) for dosing a dosing material, which dosing system (1) has a housing (11) comprising a nozzle (70) and a supply channel (62) for dosing material, and a discharge element (80) movably mounted in the housing (11) and an actuator unit (10) coupled to the discharge element,
**characterized in that**
- the actuator unit (10) comprises an actuator (12) having a membrane (13) which can be pressurized by means of a pressure medium to move the discharge element (80) in a discharge direction (RA), wherein gaseous and/or liquid substances are used as pressure medium, and **in that**
- the discharge element (80) is formed separately and is pressed against a side surface (19) of the membrane (13) pointing in the direction of the discharge element (80) by means of a force acting on the discharge element (80) for coupling to the actuator unit (10).

2. The dosing system according to claim 1, wherein the dosing system (1) is formed so that the force acting on the discharge element (80) for coupling is directed in the opposite direction to a discharge direction (RA) of the discharge element (80).

3. The dosing system according to claim 1 or 2, wherein the dosing system (1) is formed so that the discharge element (80) is pressed against the side surface (19) of the membrane (13) by means of at least one spring arrangement (84) for coupling to the actuator unit (10).

4. The dosing system according to one of the preceding claims 1 to 3, wherein the membrane (13) is formed like a disk and/or free of cavities.

5. The dosing system according to one of the preceding claims 1 to 4, wherein the housing (11) of the dosing system (1) comprises a reservoir (32) for the pressure medium and/or wherein the reservoir (32) directly adjoins a control valve (20) of the actuator unit (10) for controlling the actuator (12).

6. The dosing system according to claim 5, wherein at least one pressure sensor (33) is arranged in the reservoir (32).

7. The dosing system according to claim 5 or 6, wherein the actuator unit (10) is formed to use a pressure medium flowing out of an actuator chamber (16) of the actuator (12) as a cooling medium for cooling the control valve (20).

8. The dosing system according to one of the preceding claims 1 to 7, wherein the dosing system (1) comprises at least one sensor (18) for measuring a speed of a movement of the discharge element (80).

9. The dosing system according to one of the preceding claims 1 to 8, wherein the dosing system (1) comprises at least one pressure regulator (35) to control and/or regulate a pressure of the pressure medium as a function of an input parameter, preferably by means of a control and/or regulating unit (43) of the dosing system (1).

10. The dosing system according to one of the preceding claims 1 to 9, wherein the dosing system (1), preferably a control valve (20) of the dosing system (1) for controlling the actuator (12), comprises at least one throttle device (28) which is formed to control and/or regulate a pressure in the actuator (12) as a function of an input parameter, preferably by means of a control and/or regulating unit (43) of the dosing system (1).

11. The dosing system according to one of the preceding claims 1 to 10, wherein the dosing system (1), preferably a control valve (20) of the dosing system (1) for controlling the actuator (12), comprises at least one throttle device (28) which is formed to control and/or regulate a pressure profile during a filling of the actuator (12) and/or during emptying of the actuator (12).

12. The dosing system according to one of the preceding claims 1 to 11, wherein the dosing system (1) is formed such that a pressure is maintained in a region between the membrane (13) and a plunger seal (85), which pressure essentially corresponds to a cartridge pressure and/or wherein the dosing system (1) is formed such that a negative pressure, in particular a vacuum, is maintained in a region between the membrane (13), preferably its underside, and the plunger seal (85).

13. A method for controlling a dosing system (1) for dosing a dosing material, which dosing system (1) has a housing (11) comprising a nozzle (70) and a supply channel (62) for dosing material, and a discharge element (80) movably mounted in the housing (11) and an actuator unit (10) coupled to the discharge element,
- a membrane (13) of an actuator (12) of the actuator unit (10) being pressurized by a pressure medium to move the discharge element (80) in a discharge direction (RA) wherein gaseous and/or liquid substances are used as pressure medium, and
- the discharge element (80) being pressed against a side surface (19) of the membrane (13) pointing in the direction of the discharge element (80) by means of a force acting on the discharge element (80) for coupling to the actuator unit (10).

14. The method according to claim 13, wherein a pressure of the pressure medium is controlled and/or regulated as a function of an input parameter so that a speed of the discharge element (80) corresponds to a target value during a discharge movement.

15. The method according to claim 13 or 14, wherein a pressure of a pressure medium flowing into the actuator (12) and/or a pressure of a pressure medium flowing out of the actuator (12) is controlled and/or regulated as a function of an input parameter so that a speed of the discharge element (80) corresponds to a target value during a discharge movement and/or a retraction movement.

16. The method according to one of the claims 13 to 15, wherein a pressure of the pressure medium is controlled and/or regulated, preferably a throttle device (28) of the dosing system (1) is controlled by means of a control and/or regulating unit (43) of the dosing system (1) so that a speed of the discharge element (80) is varied during a discharge movement and/or during a retraction movement.

## Revendications

1. Système de dosage (1), destiné à doser une substance à doser, lequel système de dosage (1) comporte un boîtier (11), comprenant une buse (70) et un conduit d'alimentation (62) pour la substance à doser et un élément expulseur (80), logé de manière mobile dans le boîtier (11), ainsi qu'une unité d"actionneur (10) accouplée avec l'élément expulseur, **caractérisé en ce que**
- l'unité d"actionneur (10) comprend un actionneur (12) doté d'une membrane (13), laquelle peut être sollicitée par un fluide sous pression, pour faire bouger l'élément expulseur (80) dans une direction d'expulsion (RA), des substances gazeuses et / ou liquides étant utilisées en tant que fluide sous pression et **en ce que**
- l'élément expulseur (80) est conçu séparément et pour l'accouplement sur l'unité d"actionneur (10), est pressé au moyen d'une force agissant sur l'élément expulseur (80) contre une surface latérale (19) de la membrane (13) qui montre dans la direction de l'élément expulseur (80).

2. Système de dosage selon la revendication 1, le système de dosage (1) étant conçu de telle sorte, que la force agissant sur l'élément expulseur (80) pour l'accouplement soit opposée à une direction d'expulsion (RA) de l'élément expulseur (80).

3. Système de dosage selon la revendication 1 ou 2, le système de dosage (1) étant conçu de telle sorte, que pour l'accouplement sur l'unité d"actionneur (10), l'élément expulseur (80) soit pressé au moyen d'au moins un ensemble de ressorts (84) sur la surface latérale (19) de la membrane (13).

4. Système de dosage selon l'une quelconque des revendications 1 à 3 précédentes, la membrane (13) étant conçue sous la forme d'un disque et / ou en étant exempte de cavité.

5. Système de dosage selon l'une quelconque des revendications 1 à 4 précédentes, le boîtier (11) du système de dosage (1) comprenant un réservoir (32) pour le fluide sous pression et / ou le réservoir (32) étant directement adjacent à une soupape de commande (20) de l'unité d"actionneur (10), destinée à commander l'actionneur (12).

6. Système de dosage selon la revendication 5, dans le réservoir (32) étant placé au moins un capteur de pression (33).

7. Système de dosage selon la revendication 5 ou 6, l'unité d"actionneur (10) étant conçue pour utiliser en tant que fluide de refroidissement destiné à refroidir la soupape de commande (20) un fluide sous pression s'écoulant d'un espace d'actionneur (16) de l'actionneur (12).

8. Système de dosage selon l'une quelconque des revendications 1 à 7 précédentes, le système de dosage (1) comprenant au moins un capteur (18), destiné à mesurer une vitesse d'un mouvement de l'élément expulseur (80).

9. Système de dosage selon l'une quelconque des revendications 1 à 8 précédentes, le système de dosage (1) comprenant au moins un régulateur de pression (35), pour commander et / ou pour réguler une pression de fluide sous pression en fonction d'un paramètre d'entrée, de préférence au moyen d'une unité de commande et / ou de régulation (43) du système de dosage (1).

10. Système de dosage selon l'une quelconque des revendications 1 à 9 précédentes, pour commander l'actionneur (12), le système de dosage (1), de préférence, une soupape de commande (20) du système de dosage (1), comprenant au moins un dispositif d'étranglement (28) qui est conçu pour commander et / ou réguler une pression dans l'actionneur (12) en fonction d'un paramètre d'entrée, de préférence au moyen d'une unité de commande et / ou de régulation (43) du système de dosage (1).

11. Système de dosage selon l'une quelconque des revendications 1 à 10 précédentes, pour commander l'actionneur (12), le système de dosage (1), de préférence, une soupape de commande (20) du système de dosage (1), comprenant au moins un dispositif d'étranglement (28) qui est conçu pour commander et / ou réguler une courbe de pression pendant un remplissage de l'actionneur (12) et / ou pendant un vidage de l'actionneur (12).

12. Système de dosage selon l'une quelconque des revendications 1 à 11 précédentes, le système de dosage (1) étant conçu de telle sorte que dans une zone entre la membrane (13) et un joint de poussée (85) est réservée une pression, qui correspond sensiblement à une pression de cartouche et / ou le système de dosage (1) étant conçu de telle sorte que dans une zone entre la membrane (13), de préférence la face inférieur de celle-ci et le joint de poussée (85) est réservée une dépression, notamment un vide.

13. Procédé, destiné à commander un système de dosage (1) destiné à doser une substance à doser, lequel système de dosage (1) comporte un boîtier (11), comprenant une buse (70) et un conduit d'alimentation (62) pour la substance à doser et un élément expulseur (80), logé de manière mobile dans le boîtier (11) , ainsi qu'une unité d"actionneur (10) accouplée avec l'élément expulseur,
- une membrane (13) d'un actionneur (12) de l'unité d"actionneur (10) étant sollicitée par un fluide sous pression, pour faire bouger l'élément expulseur (80) dans une direction d'expulsion (RA), des substances gazeuses et / ou liquides étant utilisée en tant que fluide sous pression et
- pour l'accouplement sur l'unité d"actionneur (10), l'élément expulseur (80) étant pressé au moyen d'une force agissant sur l'élément expulseur (80) contre une surface latérale (19) de la membrane (13) montrant dans la direction de l'élément expulseur (80).

14. Procédé selon la revendication 13, une pression du fluide sous pression étant commandée et / ou régulée en fonction d'un paramètre d'entrée, de telle sorte qu'une vitesse de l'élément expulseur (80) lors d'un mouvement d'expulsion corresponde à une valeur de consigne.

15. Procédé selon la revendication 13 ou 14, une pression d'un fluide sous pression affluant dans l'actionneur (12) et / ou une pression d'un fluide sous pression défluant hors de l'actionneur (12) étant commandée et / ou régulée en fonction d'un paramètre d'entrée, de telle sorte qu'une vitesse de l'élément expulseur (80) lors d'un mouvement d'expulsion et / ou d'un mouvement de retrait corresponde à une valeur de consigne.

16. Procédé selon l'une quelconque des revendications 13 à 15, une pression du fluide sous pression étant commandée et / ou régulée, de préférence un dispositif d'étranglement (28) du système de dosage (1) étant actionné au moyen d'une unité de commande et / ou de régulation (43) du système de dosage (1), de telle sorte qu'une vitesse de l'élément expulseur (80) pendant un mouvement d'expulsion et / ou pendant un mouvement de retrait soit modulée.
